# EUROPEAN PATENT SPECIFICATION

(11) **EP 4 057 653 B1**
(45) Date of publication and mention of the grant of the patent: **15.10.2025**
(21) Application number: 20884072.8
(22) Date of filing: 27.10.2020
(51) Int. Cl.: H04L 5/00, H04W 72/566, H04W 72/02, H04W 92/18

(54) **RESOURCE SELECTION METHOD, TERMINAL AND COMPUTER READABLE STORAGE MEDIUM**
RESSOURCENAUSWAHLVERFAHREN, ENDGERÄT UND COMPUTERLESBARES SPEICHERMEDIUM
PROCÉDÉ DE SÉLECTION DE RESSOURCES, TERMINAL ET SUPPORT DE STOCKAGE LISIBLE PAR ORDINATEUR

(30) Priority: 08.11.2019 CN 201911089019
(43) Date of publication of application: 14.09.2022
(73) Proprietor: Datang Gohigh Intelligent and Connected Technology (Chongqing) Co., Ltd., Chongqing 400040 (CN)
(72) Inventor: WANG, Yakun, Beijing 100191 (CN); ZHAO, Li, Beijing 100191 (CN); ZHAO, Rui, Beijing 100191 (CN)
(74) Representative: dompatent von Kreisler Selting Werner - Partnerschaft von Patent- und Rechtsanwälten mbB
(86) International application number: PCT/CN2020/123958
(87) International publication number: WO 2021/088678

(56) References cited:
- CN-A- 105 578 382
- CN-A- 109 644 436
- CN-A- 110 139 240
- US-A1- 2017 188 391
- LG ELECTRONICS: "Discussion on resource allocation for Mode 2", vol. RAN WG1, no. Chongqing, China; 20191014 - 20191020, 8 October 2019 (2019-10-08), XP051809185, Retrieved from the Internet <URL:https://ftp.3gpp.org/tsg_ran/WG1_RL1/TSGR1_98b/Docs/R1-1910779.zip R1-1910779 Discussion on resource allocation for Mode 2.doc> [retrieved on 20191008]
- APPLE: "On Mode 2 Resource Allocation for NR Sidelink", vol. RAN WG1, no. Chongqing, China; 20191014 - 20191020, 5 October 2019 (2019-10-05), XP051808756, Retrieved from the Internet <URL:https://ftp.3gpp.org/tsg_ran/WG1_RL1/TSGR1_98b/Docs/R1-1910962.zip R1-1910962 On Mode 2 Resource Allocation for NR Sidelink.docx> [retrieved on 20191005]
- FRAUNHOFER HHI ET AL: "Resource Allocation for Mode 2 NR V2X", vol. RAN WG2, no. Reno, USA; 20191118 - 20191122, 7 November 2019 (2019-11-07), XP051815972, Retrieved from the Internet <URL:https://ftp.3gpp.org/tsg_ran/WG2_RL2/TSGR2_108/Docs/R2-1915555.zip R2-1915555.docx> [retrieved on 20191107]
- LENOVO ET AL: "Discussion on resource allocation for NR sidelink Mode 2", vol. RAN WG1, no. Chongqing, China; 20191014 - 20191020, 5 October 2019 (2019-10-05), XP051808447, Retrieved from the Internet <URL:https://ftp.3gpp.org/tsg_ran/WG1_RL1/TSGR1_98b/Docs/R1-1910146.zip R1-1910146.docx> [retrieved on 20191005]
- INTEL CORPORATION: "Design options to support priority for V2V communication", 3GPP DRAFT; R1-167693 INTEL - V2V PRIORITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Gothenburg, Sweden; 20160822 - 20160826, 13 August 2016 (2016-08-13), Mobile Competence Centre ; 650, route des Lucioles ; F-06921 Sophia-Antipolis Cedex ; France, XP051133080

## Description

### TECHNICAL FIELD

The present disclosure relates to the field of communication application, in particular, relates to a resource selection method, a terminal and a computer readable storage medium.

### BACKGROUND

Long Term Evolution-Vehicle to Everything (LTE-V2X) uses sensing-based semi-persistent scheduling for resource selection in respect of basic road safety applications. Difference between high and low priority levels of different traffics is reflected in configuration of a sensing threshold. The priority levels have a total of 8 levels, and 64 sensing power thresholds are configured through possible 8 priority levels in received control information and possible 8 priority levels of traffics to be transmitted by a node. The higher the priority level of the received control information, the higher the priority level of the traffic to be transmitted by the node, and the higher the sensing threshold, so that more idle resources exist in a sensing system having a high priority level, and more available transmission resources may be obtained.

However, since in the above priority-level process mechanism of the LTE-V2X, a fast time-varying jitter of a radio channel has a wider range, both the high priority level and the low priority level need to raise the threshold when the system is congested, so as to realize the resource selection. A final effect may be that the raised thresholds of the high priority level and the low priority level are the same, and resource occupation and information transmission for a traffic having a high priority level cannot be realized reliably. In addition, the LTE-V2X has no judgement of resource collision, and even if resources occupied by User Equipments (UEs) with different priority levels are the same or partially overlap, resource reselection will not be performed. In addition, because of a counter processing mechanism for the semi-persistent schedule, collision will continuously happen, the collision of the resources cannot be avoided until the resource reselection is performed next time. Thus, performance of the UE with a high priority level cannot be guaranteed, a UE with a low priority level will not actively avoid the resources occupied by the UE with the high priority level.

3GPP meeting document R1-1910779 discusses resource allocation for Mode 2.

### SUMMARY

An object of the present disclosure is to provide a resource selection method, a terminal and a computer readable storage medium, for solving the problem that a low-priority-level UE does not actively avoid resources occupied by a high-priority-level UE and a performance of a high-priority-level UE cannot be guaranteed. The present invention is defined in the accompanying claims.

The embodiments of the present disclosure have the following advantageous effects: in the above technical solutions of the embodiments of the present disclosure, the available resources available for traffic transmission in the candidate resources are determined according to the priority level of traffic transmission of the second terminal and the signal receiving power of the traffic transmission of the second terminal, and one or more target resources required by the traffic transmission are selected from the available resources according to the priority level of the traffic transmission of the first terminal, so as to realize preemption to resources by high-priority-level traffic transmission, ensure reliability of the high-priority-level traffic transmission.

### BRIEF DESCRIPTION OF THE DRAWINGS

Fig. 1 is a schematic diagram of resource collision in the related art;
Fig. 2 is a diagram illustrating resource collision of a periodic traffic that may occur in a timing period in the related art;
Fig. 3 is a schematic diagram of resource collisions of different priority levels in the related art;
Fig. 4 is a flowchart of a resource selection method according to an embodiment of the disclosure;
Fig. 5 is a first schematic diagram of determining available resources according to an embodiment of the present disclosure;
Fig. 6 is a second schematic diagram of determining available resources according to an embodiment of the present disclosure;
Fig. 7 is a third schematic diagram of determining available resources according to an embodiment of the present disclosure;
Fig. 8 is a schematic diagram of a resource selection window of a first terminal according to an embodiment of the present disclosure;
Fig. 9 is a schematic diagram of a resource selection window after a first terminal determines available resources according to an embodiment of the present disclosure;
Fig. 10 is a structural block diagram of a terminal according to an embodiment of the present disclosure;
Fig. 11 is a block diagram of a terminal according to an embodiment of the present disclosure.

### DETAILED DESCRIPTION

In order to make technical problems to be addressed, technical solutions of the present disclosure and advantages more apparent, a detailed description will be given below with reference to drawings and specific embodiments. In following description, specific details, such as specific configurations and components, are provided merely to facilitate thorough understanding of the embodiments of the present disclosure. In addition, descriptions of known functions and configuration are omitted for clarity and conciseness.

It should be understood that references to "one embodiment" or "an embodiment" throughout the specification mean that particular features, structures, or characteristics related to embodiments are included in at least one embodiment of the present disclosure. Thus, "in one embodiment" or "in an embodiment" appearing throughout the specification need not necessarily refer to the same embodiment. Furthermore, these particular features, structures, or characteristics may be combined in any suitable manner in one or more embodiments.

In various embodiments of the present disclosure, it should be understood that sizes of sequence numbers of the following processes do not imply an order of execution, the order of execution of the processes should be determined by their functions and inherent logic, and should not be construed as any limitation on implementation processes of the embodiments of the present disclosure.

In addition, such terms as "system" and "network" herein are often used interchangeably herein.

In the embodiments provided herein, it should be understood that "B corresponding to A" means that B is associated with A and B can be determined from A. However, it should also be understood that determining B from A does not mean determining B from A alone, B may also be determined from A and/or other information.

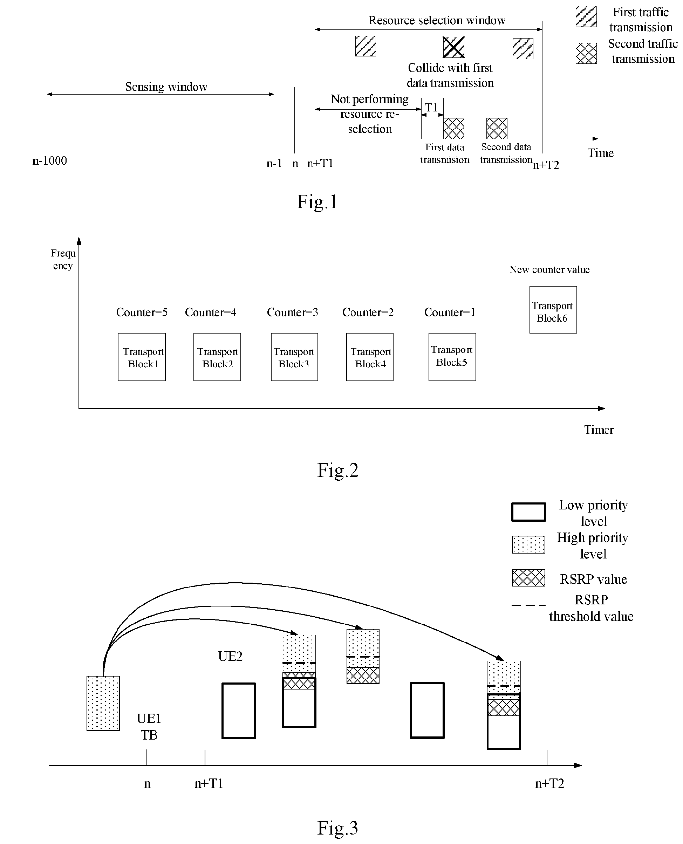

Current LTE-V2X technology is mainly designed for basic road safety applications, and only supports broadcast transmission, but does not support unicast and groupcast transmissions. If a transmitting UE needs to transmit a periodic traffic, resource selection is performed based on sensing and semi-persistent scheduling (Semi-Persistent Schedule, SPS), that is, a transport block (Transport Block, TB) arrives, the transmitting UE performs resource selection based on a result of the sensing. Once the resource selection is completed, the selected resource does not trigger reselection even if resource collision occurs before multiple transmissions of the TB, as shown in Fig. 1, the reselection is not triggered even if first traffic transmission and second traffic transmission collide. In addition, as shown in Fig. 2, when a periodic traffic occupies the resource and a counter is used for occupation for a period of time, and the UE does not reselect a resource even if resource collision occurs during the period of time. This cannot reflect preemption of resources by a high-priority-level traffic transmission and avoidance to the high-priority-level traffic transmission by a low-priority-level-level traffic transmission.

In New Radio-V2X (NR-V2X) technology, there are not only periodic traffic, but also aperiodic traffic and hybrid traffic, and in addition to supporting broadcast transmission, unicast and groupcast transmissions are also supported, a transmission mechanism is more complex. The resource selection mechanism in the related art is to exclude resources based on a Reference Signal Receiving Power (RSRP) value (resources with a RSRP being higher than a RSRP threshold value needs to be excluded). After the exclusion, it is required to ensure that a proportion of candidate resources is greater than or equal to 20% of the total number of resources in the resource selection window, and if less than 20%, then it is required to increase the RSRP threshold value, so as to raise the proportion of candidate resources until the condition of 20% is satisfied, then resources required by transmission are then selected from the candidate resources.

However, considering that different traffics have different priority levels, resource exclusion based only on RSRP cannot fully realize preemption of a high priority level and avoidance of a low priority level. As shown in Fig. 3, when UE1 has a TB arriving at time n, resource selection needs to be performed (assuming that the number of transmissions is 4), since a RSRP value of UE2 having a high priority level is smaller than a first threshold value (i.e., the RSRP threshold value), UE1 does not exclude from the resource selection window the resources occupied by UE2, so resources randomly selected by UE1 from a candidate resource set (including the resources occupied by UE2) may collide with the resources occupied by UE2 having a higher priority level. Reliability of a high-priority-level traffic may be reduced.

If resources are excluded based on RSRP according to the resource selection mechanism of LTE-V2X, and remaining resources are less than 20% of the resource selection window, then the RSRP threshold value needs to be increased. If different priority levels are not considered, all UEs increase the threshold when resources are less than 20%, then the resources reserved for the high-priority-level UE may be included in candidate resources, resulting in collision between the resources for a UE with the high priority level and the resources occupied by UE with the low priority level, which affects the reliability of the high-priority-level traffic. Therefore, based on the above contents, the present disclosure provides a resource selection method and a terminal, which can realize resource preemption by a high-priority-level UE, and a low-priority-level-level UE actively avoids resources occupied by a high-priority-level UE, and when the low-priority-level-level UE finds that the occupied resources collide with the resources occupied by the high-priority-level UE, the resource reselection is performed to ensure transmission reliability of the high-priority-level traffic.

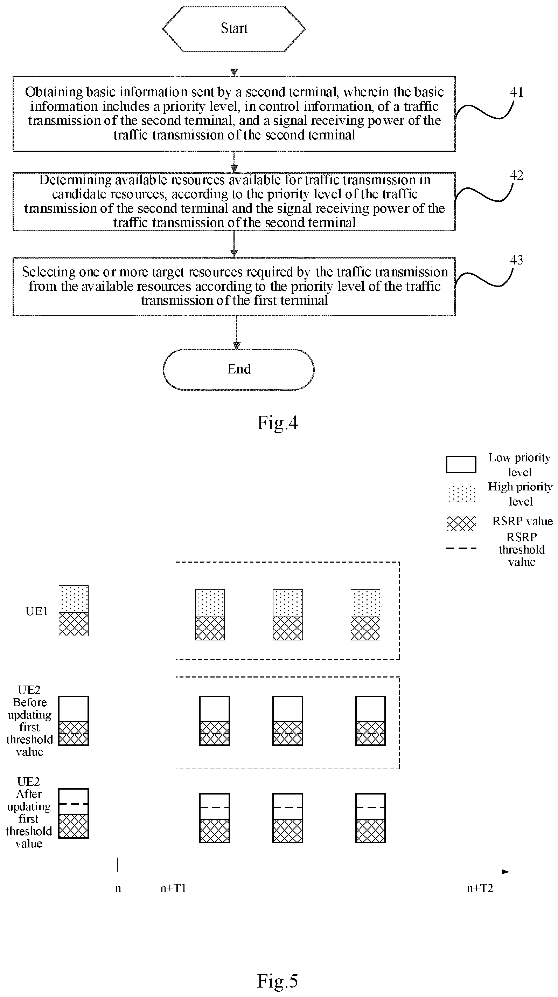

Specifically, as shown in Fig. 4, an embodiment of the present disclosure provides a resource selection method, which is applied to a first terminal and includes steps 41-43.

Step 41: obtaining basic information sent by a second terminal, wherein the basic information includes a priority level, in control information, of a traffic transmission of the second terminal, and a signal receiving power of the traffic transmission of the second terminal.

Specifically, the control information may further include indicated time-frequency resources. The signal receiving power may be RSRP or other parameters having a similar function as that of the RSRP, and is not limited herein.

Step 42: according to the priority level of the traffic transmission of the second terminal and the signal receiving power of the traffic transmission of the second terminal, determining available resources available for traffic transmission in candidate resources.

Specifically, the first terminal may determine available resources available for traffic transmission of the first terminal among the candidate resources in the resource selection window according to the priority level of the traffic transmission of the second terminal and the RSRP. The available resources are part of the candidate resources, and may be all of the candidate resources.

Step 43: selecting one or more target resources required by the traffic transmission from the available resources according to the priority level of the traffic transmission of the first terminal.

Specifically, according to the priority level of the traffic transmission of the first terminal, the first terminal may select to preempt resources occupied by the low-priority-level traffic transmission or avoid the resources occupied by the high-priority-level traffic transmission, to ensure the reliability of high-priority-level traffic transmission.

In the embodiment of the disclosure, the available resources available for the traffic transmission in the candidate resources are determined according to the priority level of the traffic transmission of the second terminal and the signal receiving power, and the one or more target resources required by the traffic transmission is selected from the available resources according to the priority level of the traffic transmission of the first terminal, so as to realize preemption of resources by the high-priority-level traffic transmission, ensure the reliability of high-priority-level traffic transmission.

Optionally, the step 42 may specifically include: determining resources required by the traffic transmission of the second terminal according to the priority level of the traffic transmission of the second terminal and/or the signal receiving power of the traffic transmission of the second terminal; determining, as the available resources according to the resources required by the traffic transmission of the second terminal, resources other than the resources required by the traffic transmission of the second terminal among the candidate resources.

Specifically, the first terminal may determine the resources required by traffic transmission of the second terminal, according to the priority level of the traffic transmission of the second terminal; the first terminal may also determine the resources required by the traffic transmission of the second terminal, according to the priority level of traffic transmission of the second terminal and the signal receiving power of the traffic transmission of the second terminal, that is, determine whether the resources occupied by the traffic transmission of the second terminal need to be excluded from the candidate resources, according to the priority level of the traffic transmission of the second terminal and/or the signal receiving power of the traffic transmission of the second terminal; if excluded, then in the candidate resources, resources other than the resources required by the traffic transmission of the second terminal are available resources, and if not excluded, the available resources include the resources required by the traffic transmission of the second terminal.

Optionally, the determining the resources required to be occupied by the traffic transmission of the second terminal may include: if a preset priority level is configured and the priority level of the traffic transmission of the second terminal is higher than or equal to the preset priority level, or if the preset priority level is not configured and the priority level of the traffic transmission of the second terminal is higher than or equal to the priority level of the traffic transmission of the first terminal, determining that, in the candidate resources, the time-frequency resources indicated by the control information are resources required by the traffic transmission of the second terminal.

Specifically, the preset priority level is the highest priority level (such as Pmin) to which the RSRP threshold value may be adjusted, and can be obtained through a high-layer signaling configuration or through pre-configuration. If the Pmin is configured, then after the first terminal successfully decodes the received control information, the first terminal compares the priority level of the traffic transmission of the second terminal with the priority level of the Pmin, If the priority level of the second terminal in the control information is higher than or equal to the preset priority level Pmin, then it is determined that in the candidate resources, the time-frequency resources indicated by the control information are the resources required by the traffic transmission of the second terminal; and if no Pmin is configured, then after the first terminal successfully decodes the received control information, the first terminal compares the priority level of the traffic transmission of the second terminal with the priority level of the traffic transmission of the first terminal, and if the priority level of the second terminal in the control information is higher than or equal to the priority level of the traffic transmission of the first terminal, then in the candidate resources, it is determined that the time-frequency resources indicated by the control information are the resources require by the traffic transmission of the second terminal, and resources other than the resources required to be occupied by the traffic transmission of the second terminal are the available resources, in other words, the first terminal may directly exclude, from the candidate resources in the resource selection window, the time-frequency resources indicated by the control information, without considering relationship between a RSRP value and the RSRP threshold value.

Optionally, the determining the resources required by the traffic transmission of the second terminal may specifically include: if a preset priority level is configured and the priority level of the traffic transmission of the second terminal is lower than the preset priority level, or if the preset priority level is not configured and when the priority level of the traffic transmission of the second terminal is lower than the priority level of the traffic transmission of the first terminal, then according to a magnitude relationship between a value of the signal receiving power and the first threshold value, determining resources required by the traffic transmission of the second terminal.

After determining that the resources other than the resources required by the traffic transmission of the second terminal among the candidate resources as the available resources, the method may further include: if the available resources do not satisfy a preset condition, updating the first threshold value according to a rule of adding a preset value to the first threshold value each time.

Optionally, determining the resources required by the traffic transmission of the second terminal according to the magnitude relationship between the signal receiving power and the first threshold value may specifically include: when the signal receiving power is larger than or equal to the first threshold value, determining that the time-frequency resources indicated by the control information among the candidate resources are the resources required by the traffic transmission of the second terminal.

Optionally, after updating the first threshold value, the method may further include: updating the available resources according to a magnitude relationship between the updated first threshold value and the signal receiving power until the available resources satisfy the preset condition.

Specifically, the preset priority level is Pmin, which can be obtained through a high-layer signaling configuration or pre-configuration. When Pmin is configured, and after the first terminal successfully decodes the received control information, the first terminal compares the priority level of the traffic transmission of the second terminal with the priority level of Pmin. If the priority level of the second terminal in the control information is lower than the preset priority level Pmin, then a LTE-V2X processing procedure can be reused, the magnitude relationship between the RSRP value and the first threshold value (i.e., RSRP threshold value) is judged. If the Pmin is not configured, then after the first terminal successfully decodes the received control information, the first terminal compares the priority level of the traffic transmission of the second terminal with the priority level of the traffic transmission of the first terminal; if the priority level of the second terminal in the control information is lower than the priority level of the traffic transmission of the first terminal, the LTE-V2X processing procedure can be reused, and the magnitude relationship between the RSRP value and the first threshold value (i.e., the RSRP threshold value); if the RSRP value is larger than the first threshold value (i.e., the RSRP threshold value), the resource is excluded from the candidate resources in the resource selection window, and it is determined that the available resources do not include the resource. If the available resources do not satisfy the preset condition (i.e., the proportion of available resources is less than X% of the total number of candidate resources of the resource selection window, X% may be 20%, but is not limited) after this resource exclusion, the RSRP threshold value of the second terminal needs to be increased by a preset value (Y dBm) and the above process is repeated until the proportion of available resources is greater than or equal to X% of the total number of candidate resources in the resource selection window. Thereafter, a magnitude relationship between the updated first threshold value and the signal receiving power is determined, and if the RSRP value is greater than the updated RSRP threshold value, the resource is excluded from the candidate resources in the resource selection window; if the RSRP value is less than or equal to the updated RSRP threshold value, then the resource is not excluded from the candidate resources in the resource selection window, i.e., the available resources include the resource, and then according to the priority level of the traffic transmission of the first terminal, one or more target resources required by traffic transmission are selected from the available resources.

Detail description is given below by way of a specific embodiment.

As shown in Fig. 5, Fig. 5 shows a case in which Pmin is not configured, a TB for a UE3 arrives at time n and traffic transmission resources needs to be selected, UE3 senses UE1 and UE2 in a sensing window, and resources reserved for UE1 and UE 2 are shown in Fig. 5. Assuming that relationship of priority levels is UE1>UE3>UE2. The resource selection window of UE3 is (n + T1) to (n + T2), and the number of transmissions is 4.

A resource exclusion process of UE3 is as follows:
UE3 obtains time-frequency resource reservation information of the 2nd/3rd/4th transmissions of UE1 by decoding control information of UE1, because the priority level of UE1 is higher than that of UE3, UE3 directly excludes the reserved resources of UE1 from the candidate resources in the resource selection window, and does not need to consider the relationship between the RSRP value and the RSRP threshold value.

UE3 obtains time-frequency resource reservation information of the 2nd/3rd/4th transmissions of UE2 by decoding control information of UE2. Because the priority level of UE2 is lower than that of UE3, the relationship between the RSRP of initial transmission of UE2 and the RSRP threshold value is determined, and if the RSRP of the initial transmission of UE2 is greater than or equal to the RSRP threshold value, the resource reserved for UE2 needs to be excluded from the candidate resources, otherwise needs to be excluded.

As shown in Fig. 5, in a first resource exclusion process, the RSRP of initial transmission of UE2 is larger than the RSRP threshold value, and the resource reserved for UE2 needs to be excluded from the candidate resources in the resource selection window. After the first resource exclusion process, the proportion of available resources of UE3 is less than 20%, and the RSRP threshold value of the low-priority-level UE2 needs to be increased by Y dBm; after the RSRP threshold value is updated and adjusted, the RSRP value is smaller than the RSRP threshold value, and there is no need to exclude the resource reserved for UE2, and the proportion of available resources is increased, and the requirement 20% is met.

Optionally, the determining the resources required to be occupied by the traffic transmission of the second terminal may specifically include: determining resources required by traffic transmission of the second terminal, according to a magnitude relationship between the signal receiving power and a first threshold value.

After determining that the resources other than the resources required by the traffic transmission of the second terminal among the candidate resources as the available resources, the method may further include: if the available resources do not meet a preset condition, then updating the first threshold value according to a rule of increasing a preset value on basis of the first threshold value each time, on the premise that the first threshold value is smaller than a second threshold value.

Optionally, determining the resources required by the traffic transmission of the second terminal according to the magnitude relationship between the signal receiving power and the first threshold value may include: if the signal receiving power is greater than or equal to the first threshold value, determining that the time-frequency resources indicated by the control information among the candidate resources are the resources required by the traffic transmission of the second terminal.

Optionally, after updating the first threshold value, the method may further include: updating the available resources according to the magnitude relationship between the updated first threshold value and the signal receiving power until the available resources satisfy the preset condition.

Specifically, each priority level of transmission and reception of the first terminal and an adjustable RSRP threshold value corresponding to a terminal having a priority level, which may be obtained through a high-layer signaling configuration or pre-configuration. After the first terminal successfully decodes the received control information, then according to the priority level of traffic transmission of the second terminal in the control information (for example, N), and a priority level (e.g. M) of the traffic transmission (traffic to be transmitted) of the first terminal, the first terminal determines an initial RSRP threshold value and an adjustable RSRP upper limit value (RSRPmax) according to sent and received priority levels N and M, the initial RSRP threshold value and the adjustable RSRP upper limit value (RSRPmax) being used for sensing a resource occupation situation, and maps the initial RSRP threshold value and the adjustable RSRP upper limit value (RSRPmax) to the candidate resources in the resource selection window, and resources having RSRPs greater than the RSRP threshold need to be excluded. If the proportion of available resources is less than X% of the total number of candidate resources in the resource selection window, the following processing is required:
a RSRP threshold value that does not reach the configured RSRPmax is increased by Y dBm, and the above process is repeated until the proportion of available resources is greater than or equal to X% of the total number of candidate resources in the resource selection window; then the magnitude relationship between the updated RSRP threshold value and the signal receiving power is determined; and, if the RSRP value is greater than the updated RSRP threshold value, then the resource is excluded from the candidate resources in the resource selection window; if the RSRP value is less than or equal to the updated RSRP threshold value, the resource is not excluded from the candidate resources in the resource selection window, that is, the available resources include the resource, and then according to the priority level of the traffic transmission of the first terminal, one or more target resources required by traffic transmission are selected from the available resources; if the configured RSRPmax is reached during this updating process, updating the RSRP threshold value is stopped.

Detail description is given below by way of a specific embodiment.

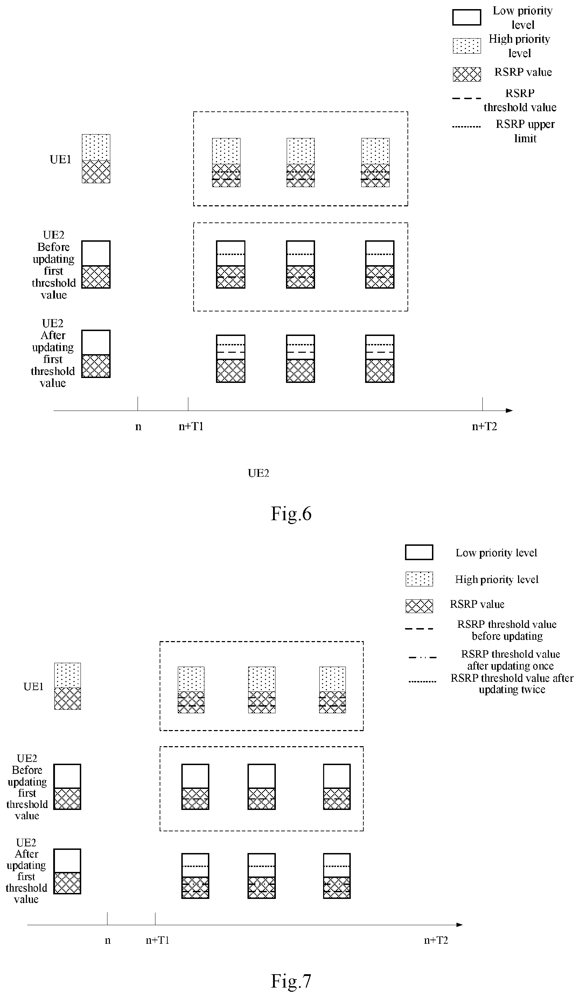

As shown in Fig. 6, a TB for a UE3 arrives at time n and a traffic transmission resource needs to be selected, UE3 senses UE1 and UE2 in a sensing window, and resources reserved for UE1 and UE 2 are shown in Fig. 6. Assuming that relationship of priority levels is UE1>UE3>UE2. The resource selection window of UE3 is (n + T1) to (n + T2), and the number of transmissions is 4.

A resource exclusion process of UE3 is as follows:
According to the relationship of the priority levels of UE1, UE2 and UE3, the maximum value RSRPmax (RSRPmax of UE1 and RSRPmax of UE2 can be the same or different) to which the RSRP threshold values of UE1 and UE2 may be adjusted may be obtained through a high-layer signaling configuration or pre-configuration; resource exclusion is performed according to the initial RSRP threshold, that is, the resources reserved for both UE1 and UE2 are excluded, and the proportion of available resources is less than 20% of the total number of candidate resources in the resource selection window; increasing the RSRP threshold value of UE1 by Y dBm will exceed the RSRPmax, therefore, the RSRP threshold value of UE1 is not adjusted, the resources reserved for UE1 are excluded from the resource selection window; increasing the RSRP threshold value of UE2 by Y dBm will not exceed RSRPmax, and the proportion of current available resources is less than 20%, therefore, the RSRP threshold value of UE2 is increased by Y dBm; after the RSRP threshold value of UE2 is adjusted, the RSRP value is less than the adjusted RSRP threshold value, and the resources reserved for UE2 do not need to be excluded from the candidate resources in the resource selection window, the proportion of available resources is increased to meet the requirement 20%.

Optionally, the determining the resources required to be occupied by the traffic transmission of the second terminal includes: determining resources required by traffic transmission of the second terminal, according to a magnitude relationship between the signal receiving power and a first threshold value.

After determining that the resources other than the resources required by the traffic transmission of the second terminal among the candidate resources as the available resources, the method may further include: if the available resources do not meet a preset condition, then updating the first threshold value according to a rule of increasing a preset value on basis of the first threshold value each time, on the premise that the number of times of updating the first threshold value is smaller than a preset number.

Optionally, determining the resources required by the traffic transmission of the second terminal according to the magnitude relationship between the signal receiving power and the first threshold value may specifically include: if the signal receiving power is greater than or equal to the first threshold value, determining that the time-frequency resources indicated by the control information among the candidate resources are the resources required by the traffic transmission of the second terminal.

Optionally, after updating the first threshold value, the method may further include: updating the available resources according to the magnitude relationship between the updated first threshold value and the signal receiving power until the available resources satisfy the preset condition.

Specifically, each priority level of transmission and reception of the first terminal and the number of times for which the RSRP threshold value corresponding to a terminal having a priority level may be adjusted may be obtained through a high-layer signaling configuration or pre-configuration. After the first terminal successfully decodes the received control information, then according to the priority level of traffic transmission of the second terminal in the control information (for example, N), and a priority level (e.g. M) of the traffic transmission (traffic to be transmitted) of the first terminal, the first terminal determines an initial RSRP threshold value and a preset number (i.e., an upper limit Tmax of adjustment times) of times of adjustable RSRP threshold values according to sent and received priority levels N and M, the initial RSRP threshold value and the preset number of times of adjustable RSRP threshold values being used for sensing a resource occupation situation, and the first terminal maps the initial RSRP threshold value and the preset number of times of adjustable RSRP threshold values to the candidate resources in the resource selection window, and resources having RSRPs greater than the RSRP threshold value need to be excluded. If the proportion of available resources is less than X% of the total number of candidate resources in the resource selection window, the following processing is required:
a RSRP threshold value which does not reach the configured Tmax is increased by Y dBm, and the above process is repeated until the proportion of available resources is greater than or equal to X% of the total number of candidate resources in the resource selection window; then the magnitude relationship between the updated RSRP threshold value and the signal receiving power is determined; and, if the RSRP value is greater than the updated RSRP threshold value, then the resource is excluded from the candidate resources in the resource selection window; if the RSRP value is less than or equal to the updated RSRP threshold value, then the resource is not excluded from the candidate resources in the resource selection window, that is, the available resources include the resource, and then according to the priority level of the traffic transmission of the first terminal, one or more target resources required by traffic transmission are selected from the available resources; if the configured Tmax is reached during this updating process, updating the RSRP threshold value is stopped.

Detail description is given below by way of a specific embodiment.

As shown in Fig. 7, a TB for a UE3 arrives at time n and a traffic transmission resource needs to be selected, UE3 senses UE1 and UE2 in a sensing window, and resources reserved for UE1 and UE 2 are shown in Fig. 7. Assuming that relationship of priority levels is UE1>UE3>UE2. The resource selection window of UE3 is (n + T1) to (n + T2), and the number of transmissions is 4.

A resource exclusion process of UE3 is as follows:
According to the relationship of the priority levels of UE1, UE2 and UE3, an upper limit value Tmax of the adjustment times for which the RSRP threshold values of UE1 and UE2 may be adjusted may be obtained through a high-layer signaling configuration or pre-configuration; assuming that the upper limit value for UE1 is one and the upper limit value for UE2 is two; resource exclusion is performed according to the initial RSRP threshold, that is, the resources reserved for both UE1 and UE2 are excluded, and the proportion of available resources is less than 20% of the total number of candidate resources in the resource selection window; the RSRP threshold values of UE1 and UE2 are adjusted by Y dBm, and then the RSRP values of UE1 and UE2 are both smaller than the updated RSRP threshold values, and the resources reserved for UE1 and UE2 still need to be excluded, and the proportion of available resources is still less than 20%; since the maximum number of adjustment times for adjusting the RSRP threshold value of UE1, only the RSRP threshold value of UE2 is adjusted, and after the adjustment, the RSRP of UE2 is less than the twice-updated RSRP threshold value, the resources reserved for UE2 need not to be excluded, and the proportion of available resources satisfy the condition 20%.

Optionally, the determining the resources required to be occupied by the traffic transmission of the second terminal includes: determining resources required by the traffic transmission of the second terminal, according to a magnitude relationship between the signal receiving power and a first threshold value.

After determining that the resources other than the resources required by the traffic transmission of the second terminal among the candidate resources as the available resources, the method may further include: if the available resources do not meet a preset condition, then updating the first threshold value according to a rule of increasing an increasing value on basis of the first threshold value each time, according to correspondence between a priority level of traffic transmission of the second terminal and the increasing value.

Optionally, determining the resources required by the traffic transmission of the second terminal according to the magnitude relationship between the signal receiving power and the first threshold value may specifically include: if the signal receiving power is greater than or equal to the first threshold value, determining that the time-frequency resources indicated by the control information among the candidate resources are the resources required by the traffic transmission of the second terminal.

Optionally, after updating the first threshold value, the method may further include: updating the available resources according to the magnitude relationship between the updated first threshold value and the signal receiving power until the available resources satisfy the preset condition.

Specifically, each priority level of transmission and reception of the first terminal and a step-size of each adjustment to an adjustable RSRP threshold value corresponding to a terminal having a priority level may be obtained through a high-layer signaling configuration or pre-configuration. After the first terminal successfully decodes the received control information, the first terminal, according to the priority level (for example, N) of traffic transmission of the second terminal in the control information and a priority level (e.g., M) of the traffic transmission (traffic to be transmitted) of the first terminal, the first terminal determines an initial RSRP threshold value and each step-size of the adjustable RSRP according to sent and received priority levels N and M, the initial RSRP threshold value and each step-size of the adjustable RSRP being used for sensing a resource occupation situation, and the first terminal maps the initial RSRP threshold value and each step-size of the adjustable RSRP to the candidate resources in the resource selection window, and resources having RSRPs greater than the RSRP threshold value need to be excluded. If the proportion of available resources is less than X% of the total number of candidate resources in the resource selection window, RSRP threshold values are increased according to step-sizes of adjustable RSRP threshold values corresponding to different priority levels until the proportion of available resources is larger than or equal to X% of the total number of candidate resources in the resource selection window. Thereafter, a magnitude relationship between the updated RSRP threshold value and the signal receiving power is determined; and, if the RSRP value is greater than the updated RSRP threshold value, then the resource is excluded from the candidate resources in the resource selection window; if the RSRP value is less than or equal to the updated RSRP threshold value, then the resource is not excluded from the candidate resources in the resource selection window, that is, the available resources include the resource, and then according to the priority level of the traffic transmission of the first terminal, one or more target resources required by traffic transmission are selected from the available resources.

Optionally, under a condition that the priority level of the traffic transmission of the first terminal is larger than or equal to the priority level of the traffic transmission of the second terminal, and after determining the resources required to be occupied by the traffic transmission of the second terminal, the method further includes: determining, as the available resources among the candidate resources, resources in an idle state and resources required by the traffic transmission of the second terminal, according to the resources required to be occupied by the traffic transmission of the second terminal.

Specifically, a high-priority-level UE (i.e. the first terminal) directly preempts resources regardless of whether the resources are idle available resources or resources already occupied by the low-priority-level UE (i.e. the second terminal). In accordance with a size of resources needing to be occupied by the traffic to be transmitted, the first terminal takes both idle resources and resources occupied by the low-priority-level UE as available resources in the candidate resources, regardless of whether the resources have been occupied. Thereafter, according to the priority level of the traffic transmission of the first terminal, one or more target resources required by the traffic transmission are selected from the available resources.

Detail description is given below by way of a specific embodiment.

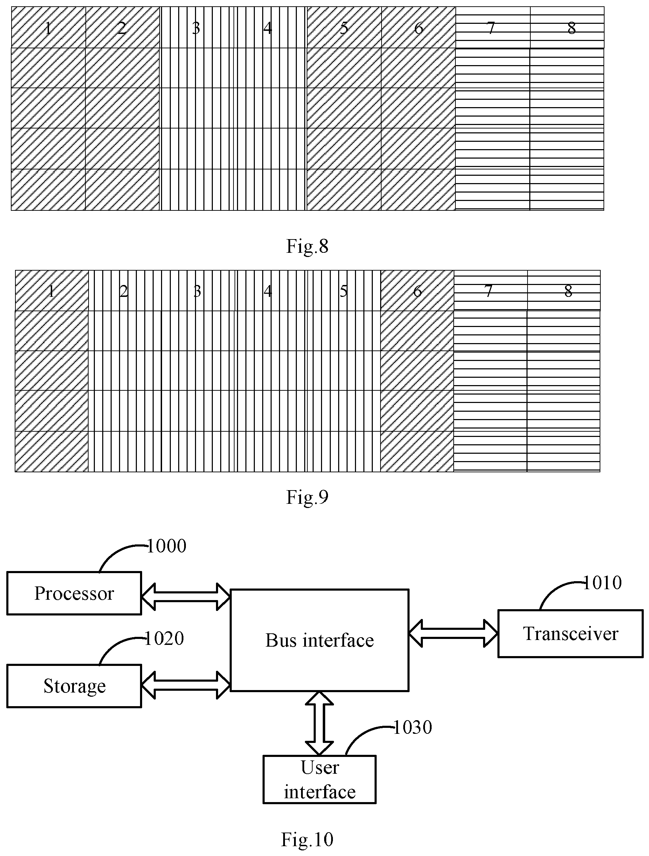

As shown in Fig. 8, Fig.8 shows a resource selection window of the first terminal (UE1), it is assumed that UE1 needs to perform four transmissions, each transmission occupies one sub-channel, and two transmissions cannot be in the same slot. The third and fourth columns are unoccupied resources, i.e., idle resources, and the first, second, fifth and sixth columns are resources determined as resources occupied by the low-priority-level UE according to the received control information, the seventh and eighth columns are resources determined as resources occupied by other high-priority-level UEs according to the received control information. A resource selection method for the UE1 may be to: directly process according to the priority level in the received control information, that is, directly take as available resources all idle resources (columns 3 and 4) and resources occupied by low-priority-level UEs (columns 1, 2, 5, 6) within the resource selection window, without updating RSRP threshold values for the resources occupied by the low-priority-level UEs; and selecting, according to the priority level of the traffic transmission of the first terminal, one or more target resources required by the traffic transmission from the available resources.

Optionally, in a case that the priority level of the traffic transmission of the first terminal is higher than or equal to the priority level of traffic transmission of the second terminal, after determining the resources required by the traffic transmission of the second terminal, the method may further include: determining, as the available resources among the candidate resources, resources in an idle state according to the resources required to be occupied by the traffic transmission of the second terminal.

Specifically, preemption performed by a high-priority-level UE (i.e. the first terminal) to resources of the low-priority-level UE (i.e. the second terminal) based on the RSRP threshold value specifically includes performing following processing by the high-priority-level UE to resources in the resource selection window according to a size of resources required to be occupied by traffic to be sent: completely excluding, according to decoded control information, resources occupied by the high-priority-level UE and the low-priority-level UE, and taking the idle resources as available resources; and determining whether the idle resources satisfy a transmission condition (i.e., whether the proportion of available resources is larger than or equal to X% of the total number of candidate resources in a resource selection window; if the idle resources do not satisfy the transmission condition, then excluding, based on RSRP, the resources occupied by the low-priority-level UE (i.e., comparing the RSRP of the low-priority-level UE with the RSRP threshold value), and determining whether the available resources satisfy a transmission condition; if the transmission condition is not met, then needing to increase the RSRP threshold value by Y dBm, so as to update the RSRP threshold value continuously until the available resources satisfy a transmission condition; then according the priority level of traffic transmission of the first terminal, selecting one or more target resources required by traffic transmission from the available resources.

Detail description is given below by way of a specific embodiment.

As shown in Fig. 8, Fig.8 shows a resource selection window of the first terminal (UE1), it is assumed that UE1 needs to perform four transmissions, each transmission occupies one sub-channel, and two transmissions cannot be in the same slot. The third and fourth columns are unoccupied resources, i.e., idle resources, and the first, second, fifth and sixth columns are resources determined as resources occupied by the low-priority-level UE according to the received control information, the seventh and eighth columns are resources determined as resources occupied by other high-priority-level UEs according to the received control information. A resource selection method for the UE1 may be to: exclude resources, including resources occupied by a low-priority-level UE and a high-priority-level UE, according to control information successfully decoded, and the available resources are idle resources only and do not satisfy a transmission condition. Resources occupied by a low-priority-level UE need to be excluded by way of updating a RSRP threshold value. As shown in Fig. 9, the second and the fifth columns are added as available resources, that is, the second to the fifth columns of resources are used as available resources. In this case, the transmission condition is satisfied; and one or more target resources required by the traffic transmission are selected from the available resources according to the priority level of the traffic transmission of the first terminal.

In the above embodiment of the present disclosure, different RSRP process method are configured for the high-priority-level UE and the low-priority-level UE, so that the high-priority-level UE can preempt the resources, and the low-priority-level UE avoids the resources occupied by the high-priority-level UE when the low-priority-level UE selects the resource, so as to ensure that transmission reliability of the high-priority-level UE, and by setting different resource selection mechanisms, the UE with a high requirement of delay can adopt random selection and preemption to ensure that a transmission delay satisfies the requirement; and the UE with a low requirement of delay may preferentially select idle resources and preempt resources when the transmission condition is not satisfied, thereby ensuring transmission reliability.

As shown in Fig. 10, an embodiment of the present disclosure also provides a terminal including a transceiver, a storage, a processor, and a program stored on the storage and executable on the processor. The processor is configured to execute the program to perform following: obtaining basic information sent by a second terminal, wherein the basic information includes a priority level, in control information, of a traffic transmission of the second terminal, and a signal receiving power of the traffic transmission of the second terminal; according to the priority level of the traffic transmission of the second terminal and the signal receiving power of the traffic transmission of the second terminal, determining available resources available for traffic transmission in candidate resources; selecting one or more target resources required by the traffic transmission from the available resources according to the priority level of the traffic transmission of the first terminal.

In Fig. 10, a bus architecture may include any number of interconnected buses and bridges, specifically, various circuits such as one or more processors represented by a processor 1000 and a memory represented by a memory 1020 are linked together. The bus architecture may also link together various other circuits, such as peripheral devices, voltage regulators, and power management circuits, which are well known in the art and, therefore, will not be described further herein. A bus interface provides an interface. A transceiver 1010 may be a number of elements, including a transmitter and a receiving which provide means for communicating with various other devices over a transmission medium. A user interface 1030 may also be an interface that can externally or internally be connected to a desired device for different user devices, including but not limited to a keypad, a display, a speaker, a microphone, a joystick, etc.

The processor 1000 is responsible for managing the bus architecture and general processing, and the memory 1020 may store data used by the processor 1000 in performing operations.

Optionally, determining available resources available for traffic transmission in candidate resources performed by the processor 1000 specifically includes: determining resources required by the traffic transmission of the second terminal according to the priority level of the traffic transmission of the second terminal and/or the signal receiving power of the traffic transmission of the second terminal; determining, as the available resources according to the resources required by the traffic transmission of the second terminal, resources other than the resources required by the traffic transmission of the second terminal among the candidate resources.

Optionally, determining the resources required to be occupied by the traffic transmission of the second terminal performed by the processor 1000 specifically includes: if a preset priority level is configured and the priority level of the traffic transmission of the second terminal is higher than or equal to the preset priority level, or if the preset priority level is not configured and the priority level of the traffic transmission of the second terminal is higher than or equal to the priority level of the traffic transmission of the first terminal, determining that, in the candidate resources, the time-frequency resources indicated by the control information are resources required by the traffic transmission of the second terminal.

Optionally, the determining the resources required by the traffic transmission of the second terminal performed by the processor 1000 specifically includes: if a preset priority level is configured and the priority level of the traffic transmission of the second terminal is lower than the preset priority level, or if the preset priority level is not configured and the priority level of the traffic transmission of the second terminal is lower than the priority level of the traffic transmission of the first terminal, then according to a magnitude relationship between a value of the signal receiving power and a first threshold value, determining resources required by the traffic transmission of the second terminal.

After determining that the resources other than the resources required by the traffic transmission of the second terminal among the candidate resources as the available resources performed by the processor 1000, the processor 1000 further implements following: if the available resources do not satisfy a preset condition, updating the first threshold value according to a rule of adding a preset value to the first threshold value each time.

Optionally, the determining the resources required by the traffic transmission of the second terminal performed by the processor 1000 specifically includes: determining the resources required by the traffic transmission of the second terminal according to the magnitude relationship between the signal receiving power and the first threshold value.

After determining that the resources other than the resources required by the traffic transmission of the second terminal among the candidate resources as the available resources performed by the processor 1000, the processor 1000 further implements: if the available resources do not meet a preset condition, then updating the first threshold value according to a rule of increasing a preset value on basis of the first threshold value each time, on the premise that the first threshold value is smaller than a second threshold value.

Optionally, the determining the resources required to be occupied by the traffic transmission of the second terminal performed by the processor 1000 specifically includes: determining resources required by traffic transmission of the second terminal, according to a magnitude relationship between the signal receiving power and a first threshold value.

After determining that the resources other than the resources required by the traffic transmission of the second terminal among the candidate resources as the available resources performed by the processor 1000, the processor 1000 further implements following: if the available resources do not meet a preset condition, then updating the first threshold value according to a rule of increasing a preset value on basis of the first threshold value each time, on the premise that the number of times of updating the first threshold value is smaller than a preset number.

Optionally, the determining the resources required by the traffic transmission of the second terminal performed by the processor 1000 specifically includes: determining resources required by traffic transmission of the second terminal, according to a magnitude relationship between the signal receiving power and a first threshold value.

After determining that the resources other than the resources required by the traffic transmission of the second terminal among the candidate resources as the available resources performed by the processor 1000, the processor 1000 further implements: if the available resources do not meet a preset condition, then updating the first threshold value according to a rule of increasing an increasing value on basis of the first threshold value each time, according to correspondence between a priority level of traffic transmission of the second terminal and the increasing value.

Optionally, determining the resources required by the traffic transmission of the second terminal according to the magnitude relationship between the signal receiving power and the first threshold value performed by the processor 1000 may specifically include: if the signal receiving power is greater than or equal to the first threshold value, determining that the time-frequency resources indicated by the control information among the candidate resources are the resources required by the traffic transmission of the second terminal.

Optionally, after updating the first threshold value performed by the processor 1000, the processor 1000 further implements: updating the available resources according to the magnitude relationship between the updated first threshold value and the signal receiving power until the available resources satisfy the preset condition.

Optionally, in a case that the priority level of the traffic transmission of the first terminal is higher than or equal to the priority level of traffic transmission of the second terminal, after determining the resources required by the traffic transmission of the second terminal performed by the processor 1000, the processor 1000 further implements: determining, as the available resources among the candidate resources, resources in an idle state and the resources required to be occupied by the traffic transmission of the second terminal, according to the resources required to be occupied by the traffic transmission of the second terminal.

Optionally, in a case that the priority level of the traffic transmission of the first terminal is higher than or equal to the priority level of traffic transmission of the second terminal, after determining the resources required by the traffic transmission of the second terminal performed by the processor 1000, the processor 1000 further implements: determining, as the available resources among the candidate resources, resources in an idle state according to the resources required to be occupied by the traffic transmission of the second terminal.

When the program is executed by the processor 1000, all the above embodiments of the resource selection method applied to the first terminal can be realized, and the same technical effects can be achieved. To avoid repetition, the description is omitted here.

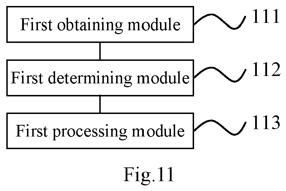

As shown in Fig. 11, an embodiment not covered by the claims of the present disclosure further provides a terminal, the terminal is a first terminal, and the terminal includes: a first obtaining module 111, configured to obtain basic information sent by a second terminal, wherein the basic information includes a priority level, in control information, of a traffic transmission of the second terminal, and a signal receiving power of the traffic transmission of the second terminal; a first determining module 112, configured to according to the priority level of the traffic transmission of the second terminal and the signal receiving power of the traffic transmission of the second terminal, determine available resources available for traffic transmission in candidate resources; a first processing module 113, configured to select one or more target resources required by the traffic transmission from the available resources according to the priority level of the traffic transmission of the first terminal.

Optionally, the first determining module 112 includes: a first determining unit, configured to determine resources required by the traffic transmission of the second terminal according to the priority level of the traffic transmission of the second terminal and/or the signal receiving power of the traffic transmission of the second terminal; a second determining unit, configured to determine, as the available resources according to the resources required by the traffic transmission of the second terminal, resources other than the resources required by the traffic transmission of the second terminal among the candidate resources.

Optionally, the first determining unit includes: a first determining sub-unit, configured to, if a preset priority level is configured and the priority level of the traffic transmission of the second terminal is higher than or equal to the preset priority level, or if the preset priority level is not configured and the priority level of the traffic transmission of the second terminal is higher than or equal to the priority level of the traffic transmission of the first terminal, determine that, in the candidate resources, the time-frequency resources indicated by the control information are resources required by the traffic transmission of the second terminal.

Optionally, the first determining unit includes: a second determining sub-unit, configured to, if a preset priority level is configured and the priority level of the traffic transmission of the second terminal is lower than the preset priority level, or if the preset priority level is not configured and the priority level of the traffic transmission of the second terminal is lower than the priority level of the traffic transmission of the first terminal, then according to a magnitude relationship between a value of the signal receiving power and a first threshold value, determine resources required by the traffic transmission of the second terminal.

The terminal further includes: a second processing module, configured to, if the available resources do not satisfy a preset condition, update the first threshold value according to a rule of adding a preset value to the first threshold value each time.

Optionally, the first determining unit includes: a third determining sub-unit, configured to determine the resources required by the traffic transmission of the second terminal according to the magnitude relationship between the signal receiving power and the first threshold value.

The terminal further includes: a third processing module, configured to, if the available resources do not meet a preset condition, then update the first threshold value according to a rule of increasing a preset value on basis of the first threshold value each time, on the premise that the first threshold value is smaller than a second threshold value.

Optionally, the first determining unit includes: a fourth determining sub-unit, configured to determine resources required by traffic transmission of the second terminal, according to a magnitude relationship between the signal receiving power and a first threshold value.

The terminal further includes: a fourth processing module, configured to, if the available resources do not meet a preset condition, then update the first threshold value according to a rule of increasing a preset value on basis of the first threshold value each time, on the premise that the number of times of updating the first threshold value is smaller than a preset number.

Optionally, the first determining unit includes: a fifth determining sub-unit, configured to determine the resources required for the traffic transmission of the second terminal according to a magnitude relationship between the signal receiving power and the first threshold value;

The terminal further includes: a fifth processing module, configured to, if the available resources do not meet a preset condition, then update the first threshold value according to a rule of increasing an increasing value on basis of the first threshold value each time, according to correspondence between a priority level of traffic transmission of the second terminal and the increasing value.

Optionally, the second determining sub-unit, the third determining sub-unit, the fourth determining sub-unit and the fifth determining sub-unit include: if the signal receiving power is greater than or equal to the first threshold value, determining that the time-frequency resources indicated by the control information among the candidate resources are the resources required by the traffic transmission of the second terminal.

Optionally, the terminal further includes: an updating module, configured to update the available resources according to the magnitude relationship between the updated first threshold value and the signal receiving power until the available resources satisfy the preset condition.

Optionally, in a case that the priority level of the traffic transmission of the first terminal is higher than or equal to the priority level of traffic transmission of the second terminal, the terminal further includes: a second determining module, configured to determine, as the available resources among the candidate resources, resources in an idle state and the resources required by the traffic transmission of the second terminal, according to the resources required by the traffic transmission of the second terminal.

Optionally, in a case that the priority level of the traffic transmission of the first terminal is higher than or equal to the priority level of traffic transmission of the second terminal, the terminal further includes: a third determining module, configured to determine, as the available resources among the candidate resources, resources in an idle state according to the resources required by the traffic transmission of the second terminal.

The terminal of the embodiment of the present disclosure can implement all the above embodiments of the resource selection method applied to the first terminal, and can achieve the same technical effect, and description thereof is not repeated here to avoid repetition.

In some embodiments of the present disclosure, there is also provided a computer readable storage medium having stored thereon a computer program. When the program is executed by a processor, the processor implements following steps: obtaining basic information sent by a second terminal, wherein the basic information includes a priority level, in control information, of a traffic transmission of the second terminal, and a signal receiving power of the traffic transmission of the second terminal; according to the priority level of the traffic transmission of the second terminal and the signal receiving power of the traffic transmission of the second terminal, determining available resources available for traffic transmission in candidate resources; selecting one or more target resources required by the traffic transmission from the available resources according to the priority level of the traffic transmission of the first terminal.

When the program is executed by the processor, all the above embodiments of the resource selection method applied to the first terminal can be realized, and the same technical effect can be achieved. In order to avoid repetition, description thereof is omitted here.

In the various embodiments of the present disclosure, it is to be understood that sizes of sequence numbers of processes described above do not imply a sequential order of execution, the order of execution of the processes should be determined by their function and inherent logic, and should not constitute any limitation on implementation processes of the embodiments of the present disclosure.

## Claims

1. A resource selection method performed by a first terminal, the method comprising:
obtaining (41) basic information transmitted by a second terminal, wherein the basic information comprises a priority level, in control information, of traffic transmission of the second terminal, and comprises a signal receiving power of the traffic transmission of the second terminal;
determining (42) available resources, in candidate resources, available for traffic transmission according to the priority level of the traffic transmission of the second terminal and the signal receiving power of the traffic transmission of the second terminal;
selecting (43) one or more target resources required by the traffic transmission from the available resources, according to a priority level of traffic transmission of the first terminal,
wherein determining (42) the available resources, in the candidate resources, available for the traffic transmission comprises:
determining resources required by the traffic transmission of the second terminal, according to the priority level of the traffic transmission of the second terminal and/or the signal receiving power of the traffic transmission of the second terminal;
determining resources, in the candidate resources, other than the resources required by the traffic transmission of the second terminal, as the available resources according to the resources required by the traffic transmission of the second terminal,
wherein determining resources required by the traffic transmission of the second terminal comprises:
determining that, in the candidate resources, time-frequency resources indicated by the control information are resources required by the traffic transmission of the second terminal, if a preset priority level is configured and the priority level of the traffic transmission of the second terminal is higher than or equal to the preset priority level, or if a preset priority level is not configured and the priority level of the traffic transmission of the second terminal is higher than or equal to the priority level of the traffic transmission of the first terminal; and
determining, according to a magnitude relationship between a value of the signal receiving power and a first threshold value, resources required by the traffic transmission of the second terminal, if a preset priority level is configured and the priority level of the traffic transmission of the second terminal is lower than the preset priority level, or if a preset priority level is not configured and the priority level of the traffic transmission of the second terminal is lower than the priority level of the traffic transmission of the first terminal; wherein, after determining resources, in the candidate resources, other than the resources required by the traffic transmission of the second terminal, as the available resources, the method further comprises: updating the first threshold value according to a rule of increasing a preset value on basis of the first threshold value each time, if the available resources do not satisfy a preset condition.

2. The resource selection method according to claim 1, wherein determining the resources required by the traffic transmission of the second terminal comprises:
determining the resources required by the traffic transmission of the second terminal, according to a magnitude relationship between the signal receiving power and the first threshold value;
wherein, after determining resources, in the candidate resources, other than the resources required by the traffic transmission of the second terminal, as the available resources, the method further comprises:
updating the first threshold value according to a rule of increasing a preset value on basis of the first threshold value each time, on the premise that the first threshold value is smaller than a second threshold value, if the available resources do not meet a preset condition.

3. The resource selection method according to claim 1, wherein determining the resources required by the traffic transmission of the second terminal comprises:
determining the resources required by traffic transmission of the second terminal, according to a magnitude relationship between the signal receiving power and a first threshold value;
wherein, after determining resources, in the candidate resources, other than the resources required by the traffic transmission of the second terminal, as the available resources, the method further comprises:
updating the first threshold value according to a rule of increasing a preset value on basis of the first threshold value each time, on the premise that the number of updating the first threshold value is less than a preset number of times, if the available resources do not meet a preset condition.

4. The resource selection method according to claim 1, wherein determining the resources required by the traffic transmission of the second terminal comprises:
determining the resources required by the traffic transmission of the second terminal, according to a magnitude relationship between the signal receiving power and a first threshold value;
wherein, after determining resources, in the candidate resources, other than the resources required by the traffic transmission of the second terminal, as the available resources, the method further comprises:
updating the first threshold value according to a rule of increasing an increasing value on basis of the first threshold value each time, according to correspondence between the priority level of the traffic transmission of the second terminal and the increasing value, if the available resources do not meet a preset condition.

5. The resource selection method according to claim 1, wherein, in a case that the priority level of the traffic transmission of the first terminal is higher than or equal to the priority level of traffic transmission of the second terminal, and after determining the resources required by the traffic transmission of the second terminal, the method further comprises:
determining, as the available resources in the candidate resources, resources in an idle state and the resources required by the traffic transmission of the second terminal, according to the resources required by the traffic transmission of the second terminal;
or,
determining, as the available resources, resources in an idle state in the candidate resources according to the resources required by the traffic transmission of the second terminal.

6. A terminal, the terminal being a first terminal, the terminal comprising:
a transceiver (1010), a storage (1020), a processor (1000) and a program stored on the storage (1020) and executable by the processor (1000), wherein the processor (1000) is configured to perform the following steps when executing the program:
obtaining basic information transmitted by a second terminal, wherein the basic information comprises a priority level, in control information, of traffic transmission of the second terminal, and comprises a signal receiving power of the traffic transmission of the second terminal;
determining available resources, in candidate resources, available for traffic transmission according to the priority level of the traffic transmission of the second terminal and the signal receiving power of the traffic transmission of the second terminal;
selecting one or more target resources required by the traffic transmission from the available resources, according to a priority level of traffic transmission of the first terminal,
wherein determining the available resources, in the candidate resources, available for the traffic transmission performed by the processor (1000) specifically comprises:
determining resources required by the traffic transmission of the second terminal, according to the priority level of the traffic transmission of the second terminal and/or the signal receiving power of the traffic transmission of the second terminal;
determining resources, in the candidate resources, other than the resources required by the traffic transmission of the second terminal, as the available resources according to the resources required by the traffic transmission of the second terminal
wherein determining resources required by the traffic transmission of the second terminal performed by the processor (1000) specifically comprises:
determining that, in the candidate resources, time-frequency resources indicated by the control information are resources required by the traffic transmission of the second terminal, if a preset priority level is configured and the priority level of the traffic transmission of the second terminal is higher than or equal to the preset priority level, or if a preset priority level is not configured and the priority level of the traffic transmission of the second terminal is higher than or equal to the priority level of the traffic transmission of the first terminal; and
determining, according to a magnitude relationship between a value of the signal receiving power and a first threshold value, resources required by the traffic transmission of the second terminal, if a preset priority level is configured and the priority level of the traffic transmission of the second terminal is lower than the preset priority level, or if a preset priority level is not configured and the priority level of the traffic transmission of the second terminal is lower than the priority level of the traffic transmission of the first terminal; wherein, after determining resources, in the candidate resources, other than the resources required by the traffic transmission of the second terminal, as the available resources performed by the processor (1000), the processor (1000) further implements when executing the program: updating the first threshold value according to a rule of increasing a preset value on basis of the first threshold value each time, if the available resources do not satisfy a preset condition.

7. The terminal according to claim 6, wherein, determining the resources required by the traffic transmission of the second terminal performed by the processor specifically comprises:
determining the resources required by the traffic transmission of the second terminal, according to a magnitude relationship between the signal receiving power and the first threshold value;
wherein the processor is further configured to perform,
after determining resources, in the candidate resources, other than the resources required by the traffic transmission of the second terminal, as the available resources performed by the processor, the following steps when executing the program:
updating the first threshold value according to a rule of increasing a preset value on basis of the first threshold value each time, on the premise that the first threshold value is smaller than a second threshold value, if the available resources do not meet a preset condition.

8. The terminal according to claim 6, wherein determining the resources required by the traffic transmission of the second terminal performed by the processor (1000) specifically comprises:
determining the resources required by traffic transmission of the second terminal, according to a magnitude relationship between the signal receiving power and a first threshold value;
wherein the processor is further configured to perform, after determining resources, in the candidate resources, other than the resources required by the traffic transmission of the second terminal, as the available resources performed by the processor, the following steps when executing the program:
updating the first threshold value according to a rule of increasing a preset value on basis of the first threshold value each time, on the premise that the number of updating the first threshold value is less than a preset number of times, if the available resources do not meet a preset condition.

9. The terminal according to claim 6, wherein determining the resources required by the traffic transmission of the second terminal performed by the processor (1000) specifically comprises:
determining the resources required by the traffic transmission of the second terminal, according to a magnitude relationship between the signal receiving power and a first threshold value;
wherein the processor is further configured to perform, after determining resources, in the candidate resources, other than the resources required by the traffic transmission of the second terminal, as the available resources performed by the processor, the following steps when executing the program:
updating the first threshold value according to a rule of increasing an increasing value on basis of the first threshold value each time, according to correspondence between the priority level of the traffic transmission of the second terminal and the increasing value, if the available resources do not meet a preset condition.

10. The terminal according to claim 6, wherein in a case that the priority level of the traffic transmission of the first terminal is higher than or equal to the priority level of traffic transmission of the second terminal, and after determining the resources required by the traffic transmission of the second terminal, the processor (1000) is configured to further perform the following steps when executing the program:
determining, as the available resources in the candidate resources, resources in an idle state and the resources required by the traffic transmission of the second terminal, according to the resources required by the traffic transmission of the second terminal;
or,
determining, as the available resources, resources in an idle state in the candidate resources according to the resources required by the traffic transmission of the second terminal.

11. A computer readable storage medium having stored thereon a computer program, which, when the computer program is executed by a processor, causes the processor to perform the following steps:
obtaining basic information transmitted by a second terminal, wherein the basic information comprises a priority level, in control information, of traffic transmission of the second terminal, and comprises a signal receiving power of the traffic transmission of the second terminal;
determining available resources, in candidate resources, available for traffic transmission according to the priority level of the traffic transmission of the second terminal and the signal receiving power of the traffic transmission of the second terminal;
selecting one or more target resources required by the traffic transmission from the available resources, according to a priority level of traffic transmission of the first terminal, wherein determining the available resources, in the candidate resources, available for the traffic transmission specifically comprises:
determining resources required by the traffic transmission of the second terminal, according to the priority level of the traffic transmission of the second terminal and/or the signal receiving power of the traffic transmission of the second terminal;
determining resources, in the candidate resources, other than the resources required by the traffic transmission of the second terminal, as the available resources according to the resources required by the traffic transmission of the second terminal
wherein determining resources required by the traffic transmission of the second terminal specifically comprises:
determining that, in the candidate resources, time-frequency resources indicated by the control information are resources required by the traffic transmission of the second terminal, if a preset priority level is configured and the priority level of the traffic transmission of the second terminal is higher than or equal to the preset priority level, or if a preset priority level is not configured and the priority level of the traffic transmission of the second terminal is higher than or equal to the priority level of the traffic transmission of the first terminal; and
determining, according to a magnitude relationship between a value of the signal receiving power and a first threshold value, resources required by the traffic transmission of the second terminal, if a preset priority level is configured and the priority level of the traffic transmission of the second terminal is lower than the preset priority level, or if a preset priority level is not configured and the priority level of the traffic transmission of the second terminal is lower than the priority level of the traffic transmission of the first terminal; wherein, after determining resources, in the candidate resources, other than the resources required by the traffic transmission of the second terminal, as the available resources, the processor further implements the following when the computer program is executed by the processor: updating the first threshold value according to a rule of increasing a preset value on basis of the first threshold value each time, if the available resources do not satisfy a preset condition.

12. The computer readable storage medium according to claim 11, wherein, determining the resources required by the traffic transmission of the second terminal specifically comprises:
determining the resources required by the traffic transmission of the second terminal, according to a magnitude relationship between the signal receiving power and the first threshold value;
wherein, after determining resources, in the candidate resources, other than the resources required by the traffic transmission of the second terminal, as the available resources, the computer program, when the computer program is executed by the processor, further causes the processor to perform the following steps: updating the first threshold value according to a rule of increasing a preset value on basis of the first threshold value each time, on the premise that the first threshold value is smaller than a second threshold value, if the available resources do not meet a preset condition.

13. The computer readable storage medium according to claim 11, wherein determining the resources required by the traffic transmission of the second terminal specifically comprises:
determining the resources required by traffic transmission of the second terminal, according to a magnitude relationship between the signal receiving power and a first threshold value;
wherein, after determining resources, in the candidate resources, other than the resources required by the traffic transmission of the second terminal, as the available resources performed by the processor, the computer program, when the computer program is executed by the processor, further causes the processor to perform the following steps:
updating the first threshold value according to a rule of increasing a preset value on basis of the first threshold value each time, on the premise that the number of updating the first threshold value is less than a preset number of times, if the available resources do not meet a preset condition.

14. The computer readable storage medium according to claim 11, wherein determining the resources required by the traffic transmission of the second terminal specifically comprises:
determining the resources required by the traffic transmission of the second terminal, according to a magnitude relationship between the signal receiving power and a first threshold value;
wherein, after determining resources, in the candidate resources, other than the resources required by the traffic transmission of the second terminal, as the available resources, the computer program, when the computer program is executed by the processor, further causes the processor to perform the following steps: updating the first threshold value according to a rule of increasing an increasing value on basis of the first threshold value each time, according to correspondence between the priority level of the traffic transmission of the second terminal and the increasing value, if the available resources do not meet a preset condition.

15. The computer readable storage medium according to claim 11, wherein in a case that the priority level of the traffic transmission of the first terminal is higher than or equal to the priority level of traffic transmission of the second terminal, and after determining the resources required by the traffic transmission of the second terminal, the computer program, when the computer program is executed by the processor, further causes the processor to perform the following steps:
determining, as the available resources in the candidate resources, resources in an idle state and the resources required by the traffic transmission of the second terminal, according to the resources required by the traffic transmission of the second terminal;
or,
determining, as the available resources, resources in an idle state in the candidate resources according to the resources required by the traffic transmission of the second terminal.

## Patentansprüche

1. Ressourcenauswahlverfahren, das von einem ersten Endgerät durchgeführt wird, wobei das Verfahren umfasst:
Erhalten (41) von Basisinformationen, die von einem zweiten Endgerät gesendet werden, wobei die Basisinformationen in den Steuerinformationen eine Prioritätsstufe für die Verkehrsübertragung des zweiten Endgeräts umfassen und eine Signalempfangsleistung der Verkehrsübertragung des zweiten Endgeräts umfassen;
Bestimmen (42) von verfügbaren Ressourcen aus den Kandidatenressourcen, die für die Verkehrsübertragung entsprechend der Prioritätsstufe der Verkehrsübertragung des zweiten Endgeräts und die Signalempfangsleistung der Verkehrsübertragung des zweiten Endgeräts verfügbar sind;
Auswählen (43) einer oder mehrerer Zielressourcen, welche die Verkehrsübertragung erfordert, aus den verfügbaren Ressourcen entsprechend einer Prioritätsstufe der Verkehrsübertragung des ersten Endgeräts,
wobei das Bestimmen (42) der verfügbaren Ressourcen aus den Kandidatenressourcen, die für die Verkehrsübertragung verfügbar sind, umfasst:
Bestimmen von Ressourcen, welche die Verkehrsübertragung des zweiten Endgeräts erfordert, entsprechend der Prioritätsstufe der Verkehrsübertragung des zweiten Endgeräts und/oder der Signalempfangsleistung der Verkehrsübertragung des zweiten Endgeräts;
Bestimmen von Ressourcen aus den Kandidatenressourcen, die sich von den Ressourcen unterscheiden, welche die Verkehrsübertragung des zweiten Endgeräts erfordert, als die verfügbaren Ressourcen entsprechend den Ressourcen, welche die Verkehrsübertragung des zweiten Endgeräts erfordert,
wobei das Bestimmen von Ressourcen, welche die Verkehrsübertragung des zweiten Endgeräts erfordert, umfasst:
Bestimmen, dass, aus den Kandidatenressourcen, Zeitfrequenzressourcen, die von den Steuerinformationen angegeben werden, Ressourcen sind, welche die Verkehrsübertragung des zweiten Endgeräts erfordert, wenn eine vorbestimmte Prioritätsstufe konfiguriert ist und die Prioritätsstufe der Verkehrsübertragung des zweiten Endgeräts höher als oder gleich der vorbestimmten Prioritätsstufe ist, oder wenn eine vorbestimmte Prioritätsstufe nicht konfiguriert ist und die Prioritätsstufe der Verkehrsübertragung des zweiten Endgeräts höher als oder gleich der Prioritätsstufe der Verkehrsübertragung des ersten Endgeräts ist; und
Bestimmen, entsprechend einem Größenverhältnis zwischen einem Wert der Signalempfangsleistung und einem ersten Schwellenwert, von Ressourcen, welche die Verkehrsübertragung des zweiten Endgeräts erfordert, wenn eine vorbestimmte Prioritätsstufe konfiguriert ist und die Prioritätsstufe der Verkehrsübertragung des zweiten Endgeräts niedriger als die vorbestimmte Prioritätsstufe ist, oder wenn eine vorbestimmte Prioritätsstufe nicht konfiguriert ist und die Prioritätsstufe der Verkehrsübertragung des zweiten Endgeräts niedriger als die Prioritätsstufe der Verkehrsübertragung des ersten Endgeräts ist; wobei nach dem Bestimmen von Ressourcen aus den Kandidatenressourcen, die sich von den Ressourcen unterschieden, welche die Verkehrsübertragung des zweiten Endgeräts erfordert, als die verfügbaren Ressourcen, das Verfahren ferner umfasst: Aktualisieren des ersten Schwellenwerts entsprechend einer Regel zur Erhöhung eines vorbestimmten Werts basierend auf dem ersten Schwellenwert jedes Mal, wenn die verfügbaren Ressourcen eine vorbestimmte Bedingung nicht erfüllen.

2. Ressourcenauswahlverfahren nach Anspruch 1, wobei das Bestimmen der Ressourcen, welche die Verkehrsübertragung des zweiten Endgeräts erfordert, umfasst:
Bestimmen der Ressourcen, welche die Verkehrsübertragung des zweiten Endgeräts erfordert, entsprechend einem Größenverhältnis zwischen der Signalempfangsleistung und dem ersten Schwellenwert;
wobei nach dem Bestimmen von Ressourcen aus den Kandidatenressourcen, die sich von den Ressourcen unterscheiden, welche die Verkehrsübertragung des zweiten Endgeräts erfordert, als die verfügbaren Ressourcen, das Verfahren ferner umfasst: Aktualisieren des ersten Schwellenwerts entsprechend einer Regel zur Erhöhung eines vorbestimmten Werts basierend auf dem ersten Schwellenwert jedes Mal, unter der Voraussetzung, dass der ersten Schwellenwert kleiner als der zweite Schwellenwert ist, wenn die verfügbaren Ressourcen eine vorbestimmte Bedingung nicht erfüllen.

3. Ressourcenauswahlverfahren nach Anspruch 1, wobei das Bestimmen der Ressourcen, welche die Verkehrsübertragung des zweiten Endgeräts erfordert, umfasst:
Bestimmen der Ressourcen, welche die Verkehrsübertragung des zweiten Endgeräts erfordert, entsprechend einem Größenverhältnis zwischen der Signalempfangsleistung und dem ersten Schwellenwert;
wobei nach dem Bestimmen von Ressourcen aus den Kandidatenressourcen, die sich von den Ressourcen unterscheiden, welche die Verkehrsübertragung des zweiten Endgeräts erfordert, als die verfügbaren Ressourcen, das Verfahren ferner umfasst: Aktualisieren des ersten Schwellenwerts entsprechend einer Regel zur Erhöhung eines vorbestimmten Werts basierend auf dem ersten Schwellenwert jedes Mal, unter der Voraussetzung, dass die Anzahl der Aktualisierungen des ersten Schwellenwerts kleiner als eine vorbestimmten Anzahl von Malen ist, wenn die verfügbaren Ressourcen eine vorbestimmte Bedingung nicht erfüllen.

4. Ressourcenauswahlverfahren nach Anspruch 1, wobei das Bestimmen der Ressourcen, welche die Verkehrsübertragung des zweiten Endgeräts erfordert, umfasst:
Bestimmen der Ressourcen, welche die Verkehrsübertragung des zweiten Endgeräts erfordert, entsprechend einem Größenverhältnis zwischen der Signalempfangsleistung und dem ersten Schwellenwert;
wobei nach dem Bestimmen von Ressourcen aus den Kandidatenressourcen, die sich von den Ressourcen unterscheiden, welche die Verkehrsübertragung des zweiten Endgeräts erfordert, als die verfügbaren Ressourcen, das Verfahren ferner umfasst: Aktualisieren des ersten Schwellenwerts entsprechend einer Regel zur Erhöhung eines steigenden Werts basierend auf dem ersten Schwellenwert jedes Mal, entsprechend einer Übereinstimmung zwischen der Prioritätsstufe der Verkehrsübertragung des zweiten Endgeräts und dem steigenden Wert, wenn die verfügbaren Ressourcen eine vorbestimmte Bedingung nicht erfüllen.

5. Ressourcenauswahlverfahren nach Anspruch 1, wobei, in dem Fall, dass die Prioritätsstufe der Verkehrsübertragung des ersten Endgeräts höher als oder gleich der Prioritätsstufe der Verkehrsübertragung des zweiten Endgeräts ist, und nach dem Bestimmen der Ressourcen, welche die Verkehrsübertragung des zweiten Endgeräts erfordert, das Verfahren ferner umfasst:
Bestimmen, als die verfügbaren Ressourcen aus den Kandidatenressourcen, von Ressourcen in einem Leerlaufzustand und der Ressourcen, welche die Verkehrsübertragung des zweiten Endgeräts erfordert, entsprechend den Ressourcen, welche die Verkehrsübertragung des zweiten Endgeräts erfordert;
oder
Bestimmen, als die verfügbaren Ressourcen, von Ressourcen in einem Leerlaufzustand aus den Kandidatenressourcen entsprechend den Ressourcen, welche die Verkehrsübertragung des zweiten Endgeräts erfordert.

6. Endgerät, wobei das Endgerät ein erstes Endgerät ist, wobei das Endgerät aufweist:
einen Transceiver (1010), einen Speicher (1020), einen Prozessor (1000) und ein Programm, das auf dem Speicher (1020) gespeichert ist und von dem Prozessor (1000) ausführbar ist, wobei der Prozessor (1000) dazu ausgebildet ist, die folgenden Schritte beim Ausführen des Programms durchzuführen:
Erhalten von Basisinformationen, die von einem zweiten Endgerät gesendet werden, wobei die Basisinformationen in den Steuerinformationen eine Prioritätsstufe für die Verkehrsübertragung des zweiten Endgeräts umfassen und eine Signalempfangsleistung der Verkehrsübertragung des zweiten Endgeräts umfassen;
Bestimmen von verfügbaren Ressourcen aus den Kandidatenressourcen, die für die Verkehrsübertragung entsprechend der Prioritätsstufe der Verkehrsübertragung des zweiten Endgeräts und die Signalempfangsleistung der Verkehrsübertragung des zweiten Endgeräts verfügbar sind;
Auswählen einer oder mehrerer Zielressourcen, welche die Verkehrsübertragung erfordert, aus den verfügbaren Ressourcen entsprechend einer Prioritätsstufe der Verkehrsübertragung des ersten Endgeräts, wobei das Bestimmen der verfügbaren Ressourcen aus den Kandidatenressourcen, die für die Verkehrsübertragung verfügbar sind, was von dem Prozessor (1000) durchgeführt wird, insbesondere umfasst:
Bestimmen von Ressourcen, welche die Verkehrsübertragung des zweiten Endgeräts erfordert, entsprechend der Prioritätsstufe der Verkehrsübertragung des zweiten Endgeräts und/oder der Signalempfangsleistung der Verkehrsübertragung des zweiten Endgeräts;
Bestimmen von Ressourcen aus den Kandidatenressourcen, die sich von den Ressourcen unterscheiden, welche die Verkehrsübertragung des zweiten Endgeräts erfordert, als die verfügbaren Ressourcen entsprechend den Ressourcen, welche die Verkehrsübertragung des zweiten Endgeräts erfordert, wobei das Bestimmen von Ressourcen, welche die Verkehrsübertragung des zweiten Endgeräts erfordert, was von dem Prozessor (1000) durchgeführt wird, insbesondere umfasst:
Bestimmen, dass, aus den Kandidatenressourcen, Zeitfrequenzressourcen, die von den Steuerinformationen angegeben werden, Ressourcen sind, welche die Verkehrsübertragung des zweiten Endgeräts erfordert, wenn eine vorbestimmte Prioritätsstufe konfiguriert ist und die Prioritätsstufe der Verkehrsübertragung des zweiten Endgeräts höher als oder gleich der vorbestimmten Prioritätsstufe ist, oder wenn eine vorbestimmte Prioritätsstufe nicht konfiguriert ist und die Prioritätsstufe der Verkehrsübertragung des zweiten Endgeräts höher als oder gleich der Prioritätsstufe der Verkehrsübertragung des ersten Endgeräts ist; und
Bestimmen, entsprechend einem Größenverhältnis zwischen einem Wert der Signalempfangsleistung und einem ersten Schwellenwert, von Ressourcen, welche die Verkehrsübertragung des zweiten Endgeräts erfordert, wenn eine vorbestimmte Prioritätsstufe konfiguriert ist und die Prioritätsstufe der Verkehrsübertragung des zweiten Endgeräts niedriger als die vorbestimmte Prioritätsstufe ist, oder wenn eine vorbestimmte Prioritätsstufe nicht konfiguriert ist und die Prioritätsstufe der Verkehrsübertragung des zweiten Endgeräts niedriger als die Prioritätsstufe der Verkehrsübertragung des ersten Endgeräts ist; wobei nach dem Bestimmen von Ressourcen aus den Kandidatenressourcen, die sich von den Ressourcen unterschieden, welche die Verkehrsübertragung des zweiten Endgeräts erfordert, als die verfügbaren Ressourcen, was von dem Prozessor (1000) durchgeführt wird, der Prozessor (1000) beim Ausführen des Programms ferner folgendes implementiert: Aktualisieren des ersten Schwellenwerts entsprechend einer Regel zur Erhöhung eines vorbestimmten Werts basierend auf dem ersten Schwellenwert jedes Mal, wenn die verfügbaren Ressourcen eine vorbestimmte Bedingung nicht erfüllen.

7. Endgerät nach Anspruch 6, wobei das Bestimmen der Ressourcen, welche die Verkehrsübertragung des zweiten Endgeräts erfordert, was von dem Prozessor durchgeführt wird, insbesondere umfasst:
Bestimmen der Ressourcen, welche die Verkehrsübertragung des zweiten Endgeräts erfordert, entsprechend einem Größenverhältnis zwischen der Signalempfangsleistung und dem ersten Schwellenwert;
wobei der Prozessor ferner dazu ausgebildet ist, nach dem Bestimmen von Ressourcen aus den Kandidatenressourcen, die sich von den Ressourcen unterscheiden, welche die Verkehrsübertragung des zweiten Endgeräts erfordert, als die verfügbaren Ressourcen, was von dem Prozessor durchgeführt wird, beim Ausführen des Programms die folgenden Schritte durchzuführen:
Aktualisieren des ersten Schwellenwerts entsprechend einer Regel zur Erhöhung eines vorbestimmten Werts basierend auf dem ersten Schwellenwert jedes Mal, unter der Voraussetzung, dass der ersten Schwellenwert kleiner als der zweite Schwellenwert ist, wenn die verfügbaren Ressourcen eine vorbestimmte Bedingung nicht erfüllen.

8. Endgerät nach Anspruch 6, wobei das Bestimmen der Ressourcen, welche die Verkehrsübertragung des zweiten Endgeräts erfordert, was von dem Prozessor (1000) durchgeführt wird, insbesondere umfasst:
Bestimmen der Ressourcen, welche die Verkehrsübertragung des zweiten Endgeräts erfordert, entsprechend einem Größenverhältnis zwischen der Signalempfangsleistung und dem ersten Schwellenwert;
wobei der Prozessor ferner dazu ausgebildet ist, nach dem Bestimmen von Ressourcen aus den Kandidatenressourcen, die sich von den Ressourcen unterscheiden, welche die Verkehrsübertragung des zweiten Endgeräts erfordert, als die verfügbaren Ressourcen, was von dem Prozessor durchgeführt wird, beim Ausführen des Programms die folgenden Schritte durchzuführen:
Aktualisieren des ersten Schwellenwerts entsprechend einer Regel zur Erhöhung eines vorbestimmten Werts basierend auf dem ersten Schwellenwert jedes Mal, unter der Voraussetzung, dass die Anzahl der Aktualisierungen des ersten Schwellenwerts kleiner als eine vorbestimmten Anzahl von Malen ist, wenn die verfügbaren Ressourcen eine vorbestimmte Bedingung nicht erfüllen.

9. Endgerät nach Anspruch 6, wobei das Bestimmen der Ressourcen, welche die Verkehrsübertragung des zweiten Endgeräts erfordert, was von dem Prozessor (1000) durchgeführt wird, insbesondere umfasst:
Bestimmen der Ressourcen, welche die Verkehrsübertragung des zweiten Endgeräts erfordert, entsprechend einem Größenverhältnis zwischen der Signalempfangsleistung und dem ersten Schwellenwert;
wobei der Prozessor ferner dazu ausgebildet ist, nach dem Bestimmen von Ressourcen aus den Kandidatenressourcen, die sich von den Ressourcen unterscheiden, welche die Verkehrsübertragung des zweiten Endgeräts erfordert, als die verfügbaren Ressourcen, was von dem Prozessor durchgeführt wird, beim Ausführen die Programms die folgenden Schritte durchzuführen:
Aktualisieren des ersten Schwellenwerts entsprechend einer Regel zur Erhöhung eines steigenden Werts basierend auf dem ersten Schwellenwert jedes Mal, entsprechend einer Übereinstimmung zwischen der Prioritätsstufe der Verkehrsübertragung des zweiten Endgeräts und dem steigenden Wert, wenn die verfügbaren Ressourcen eine vorbestimmte Bedingung nicht erfüllen.

10. Endgerät nach Anspruch 6, wobei in dem Fall, dass die Prioritätsstufe der Verkehrsübertragung des ersten Endgeräts höher als oder gleich der Prioritätsstufe der Verkehrsübertragung des zweiten Endgeräts ist, und nach dem Bestimmen der Ressourcen, welche die Verkehrsübertragung des zweiten Endgeräts erfordert, der Prozessor (1000) dazu ausgebildet ist, beim Ausführen des Programms ferner die folgenden Schritte durchzuführen:
Bestimmen, als die verfügbaren Ressourcen aus den Kandidatenressourcen, von Ressourcen in einem Leerlaufzustand und der Ressourcen, welche die Verkehrsübertragung des zweiten Endgeräts erfordert, entsprechend den Ressourcen, welche die Verkehrsübertragung des zweiten Endgeräts erfordert;
oder
Bestimmen, als die verfügbaren Ressourcen, von Ressourcen in einem Leerlaufzustand aus den Kandidatenressourcen entsprechend den Ressourcen, welche die Verkehrsübertragung des zweiten Endgeräts erfordert.

11. Computerlesbares Speichermedium, auf dem ein Computerprogramm gespeichert ist, das bei Ausführung des Computerprogramms durch einen Prozessor bewirkt, dass der Prozessor die folgenden Schritte durchführt:
Erhalten von Basisinformationen, die von einem zweiten Endgerät gesendet werden, wobei die Basisinformationen in den Steuerinformationen eine Prioritätsstufe für die Verkehrsübertragung des zweiten Endgeräts umfassen und eine Signalempfangsleistung der Verkehrsübertragung des zweiten Endgeräts umfassen;
Bestimmen von verfügbaren Ressourcen in den Kandidatenressourcen, die für die Verkehrsübertragung entsprechend der Prioritätsstufe der Verkehrsübertragung des zweiten Endgeräts und die Signalempfangsleistung der Verkehrsübertragung des zweiten Endgeräts verfügbar sind;
Auswählen einer oder mehrerer Zielressourcen, welche die Verkehrsübertragung erfordert, aus den verfügbaren Ressourcen entsprechend einer Prioritätsstufe der Verkehrsübertragung des ersten Endgeräts, wobei das Bestimmen der verfügbaren Ressourcen aus den Kandidatenressourcen, die für die Verkehrsübertragung verfügbar sind, insbesondere umfasst:
Bestimmen von Ressourcen, welche die Verkehrsübertragung des zweiten Endgeräts erfordert, entsprechend der Prioritätsstufe der Verkehrsübertragung des zweiten Endgeräts und/oder der Signalempfangsleistung der Verkehrsübertragung des zweiten Endgeräts;
Bestimmen von Ressourcen aus den Kandidatenressourcen, die sich von den Ressourcen unterscheiden, welche die Verkehrsübertragung des zweiten Endgeräts erfordert, als die verfügbaren Ressourcen entsprechend den Ressourcen, welche die Verkehrsübertragung des zweiten Endgeräts erfordert, wobei das Bestimmen von Ressourcen, welche die Verkehrsübertragung des zweiten Endgeräts erfordert, insbesondere umfasst:
Bestimmen, dass, aus den Kandidatenressourcen, Zeitfrequenzressourcen, die von den Steuerinformationen angegeben werden, Ressourcen sind, welche die Verkehrsübertragung des zweiten Endgeräts erfordert, wenn eine vorbestimmte Prioritätsstufe konfiguriert ist und die Prioritätsstufe der Verkehrsübertragung des zweiten Endgeräts höher als oder gleich der vorbestimmten Prioritätsstufe ist, oder wenn eine vorbestimmte Prioritätsstufe nicht konfiguriert ist und die Prioritätsstufe der Verkehrsübertragung des zweiten Endgeräts höher als oder gleich der Prioritätsstufe der Verkehrsübertragung des ersten Endgeräts ist; und
Bestimmen, entsprechend einem Größenverhältnis zwischen einem Wert der Signalempfangsleistung und einem ersten Schwellenwert, von Ressourcen, welche die Verkehrsübertragung des zweiten Endgeräts erfordert, wenn eine vorbestimmte Prioritätsstufe konfiguriert ist und die Prioritätsstufe der Verkehrsübertragung des zweiten Endgeräts niedriger als die vorbestimmte Prioritätsstufe ist, oder wenn eine vorbestimmte Prioritätsstufe nicht konfiguriert ist und die Prioritätsstufe der Verkehrsübertragung des zweiten Endgeräts niedriger als die Prioritätsstufe der Verkehrsübertragung des ersten Endgeräts ist; wobei nach dem Bestimmen von Ressourcen aus den Kandidatenressourcen, die sich von den Ressourcen unterschieden, welche die Verkehrsübertragung des zweiten Endgeräts erfordert, als die verfügbaren Ressourcen,
der Prozessor ferner Folgendes implementiert, wenn das Computerprogramm von dem Prozessor ausgeführt wird: Aktualisieren des ersten Schwellenwerts entsprechend einer Regel zur Erhöhung eines vorbestimmten Werts basierend auf dem ersten Schwellenwert jedes Mal, wenn die verfügbaren Ressourcen eine vorbestimmte Bedingung nicht erfüllen.

12. Computerlesbares Speichermedium nach Anspruch 11, wobei das Bestimmen der Ressourcen, welche die Verkehrsübertragung des zweiten Endgeräts erfordert, insbesondere umfasst:
Bestimmen der Ressourcen, welche die Verkehrsübertragung des zweiten Endgeräts erfordert, entsprechend einem Größenverhältnis zwischen der Signalempfangsleistung und dem ersten Schwellenwert;
wobei nach dem Bestimmen von Ressourcen aus den Kandidatenressourcen, die sich von den Ressourcen unterscheiden, welche die Verkehrsübertragung des zweiten Endgeräts erfordert, als die verfügbaren Ressourcen, das Computerprogramm, wenn das Computerprogramm von dem Prozessor ausgeführt wird, ferner bewirkt, dass der Prozessor die folgenden Schritte durchführt:
Aktualisieren des ersten Schwellenwerts entsprechend einer Regel zur Erhöhung eines vorbestimmten Werts basierend auf dem ersten Schwellenwert jedes Mal, unter der Voraussetzung, dass der ersten Schwellenwert kleiner als der zweite Schwellenwert ist, wenn die verfügbaren Ressourcen eine vorbestimmte Bedingung nicht erfüllen.

13. Computerlesbares Speichermedium nach Anspruch 11, wobei das Bestimmen der Ressourcen, welche die Verkehrsübertragung des zweiten Endgeräts erfordert, insbesondere umfasst:
Bestimmen der Ressourcen, welche die Verkehrsübertragung des zweiten Endgeräts erfordert, entsprechend einem Größenverhältnis zwischen der Signalempfangsleistung und dem ersten Schwellenwert;
wobei nach dem Bestimmen von Ressourcen aus den Kandidatenressourcen, die sich von den Ressourcen unterscheiden, welche die Verkehrsübertragung des zweiten Endgeräts erfordert, als die verfügbaren Ressourcen, das Computerprogramm, wenn das Computerprogramm von dem Prozessor ausgeführt wird, ferner bewirkt, dass der Prozessor die folgenden Schritte durchführt:
Aktualisieren des ersten Schwellenwerts entsprechend einer Regel zur Erhöhung eines vorbestimmten Werts basierend auf dem ersten Schwellenwert jedes Mal, unter der Voraussetzung, dass die Anzahl der Aktualisierungen des ersten Schwellenwerts kleiner als eine vorbestimmten Anzahl von Malen ist, wenn die verfügbaren Ressourcen eine vorbestimmte Bedingung nicht erfüllen.

14. Computerlesbares Speichermedium nach Anspruch 11, wobei das Bestimmen der Ressourcen, welche die Verkehrsübertragung des zweiten Endgeräts erfordert, insbesondere umfasst:
Bestimmen der Ressourcen, welche die Verkehrsübertragung des zweiten Endgeräts erfordert, entsprechend einem Größenverhältnis zwischen der Signalempfangsleistung und dem ersten Schwellenwert;
wobei nach dem Bestimmen von Ressourcen aus den Kandidatenressourcen, die sich von den Ressourcen unterscheiden, welche die Verkehrsübertragung des zweiten Endgeräts erfordert, als die verfügbaren Ressourcen, das Computerprogramm, wenn das Computerprogramm von dem Prozessor ausgeführt wird, ferner bewirkt, dass der Prozessor die folgenden Schritte durchführt:
Aktualisieren des ersten Schwellenwerts entsprechend einer Regel zur Erhöhung eines steigenden Werts basierend auf dem ersten Schwellenwert jedes Mal, entsprechend einer Übereinstimmung zwischen der Prioritätsstufe der Verkehrsübertragung des zweiten Endgeräts und dem steigenden Wert, wenn die verfügbaren Ressourcen eine vorbestimmte Bedingung nicht erfüllen.

15. Computerlesbares Speichermedium nach Anspruch 11, wobei, in dem Fall, dass die Prioritätsstufe der Verkehrsübertragung des ersten Endgeräts höher als oder gleich der Prioritätsstufe der Verkehrsübertragung des zweiten Endgeräts ist, und nach dem Bestimmen der Ressourcen, welche die Verkehrsübertragung des zweiten Endgeräts erfordert, das Computerprogramm, wenn das Computerprogramm von dem Prozessor ausgeführt wird, ferner bewirkt, dass der Prozessor die folgenden Schritte durchführt:
Bestimmen, als die verfügbaren Ressourcen aus den Kandidatenressourcen, von Ressourcen in einem Leerlaufzustand und der Ressourcen, welche die Verkehrsübertragung des zweiten Endgeräts erfordert, entsprechend den Ressourcen, welche die Verkehrsübertragung des zweiten Endgeräts erfordert;
oder
Bestimmen, als die verfügbaren Ressourcen, von Ressourcen in einem Leerlaufzustand aus den Kandidatenressourcen entsprechend den Ressourcen, welche die Verkehrsübertragung des zweiten Endgeräts erfordert.

## Revendications

1. Procédé de sélection de ressources mis en œuvre par un premier terminal, le procédé comprenant les étapes consistant à :
obtenir (41) des informations de base transmises par un second terminal, dans lequel les informations de base comprennent un niveau de priorité, dans des informations de commande, de transmission de trafic du second terminal, et comprennent une puissance de réception de signal de la transmission de trafic du second terminal ;
déterminer (42) des ressources disponibles, dans des ressources candidates, disponibles pour une transmission de trafic conformément au niveau de priorité de la transmission de trafic du second terminal et à la puissance de réception de signal de la transmission de trafic du second terminal ;
sélectionner (43) une ou plusieurs ressources cibles requises par la transmission de trafic parmi les ressources disponibles, conformément à un niveau de priorité de transmission de trafic du premier terminal,
dans lequel l'étape de détermination (42) des ressources disponibles, dans les ressources candidates, disponibles pour la transmission de trafic consiste à :
déterminer des ressources requises par la transmission de trafic du second terminal, conformément au niveau de priorité de la transmission de trafic du second terminal et/ou à la puissance de réception de signal de la transmission de trafic du second terminal ;
déterminer des ressources, dans les ressources candidates, autres que les ressources requises par la transmission de trafic du second terminal, en tant que les ressources disponibles conformément aux ressources requises par la transmission de trafic du second terminal,
dans lequel la détermination de ressources requises par la transmission de trafic du second terminal consiste à :
déterminer que, dans les ressources candidates, des ressources temps-fréquence indiquées par les informations de commande sont des ressources requises par la transmission de trafic du second terminal, si un niveau de priorité prédéfini est configuré et que le niveau de priorité de la transmission de trafic du second terminal est supérieur ou égal au niveau de priorité prédéfini, ou si un niveau de priorité prédéfini n'est pas configuré et que le niveau de priorité de la transmission de trafic du second terminal est supérieur ou égal au niveau de priorité de la transmission de trafic du premier terminal ; et
déterminer, conformément à une relation d'amplitude entre une valeur de la puissance de réception de signal et une première valeur seuil, des ressources requises par la transmission de trafic du second terminal, si un niveau de priorité prédéfini est configuré et que le niveau de priorité de la transmission de trafic du second terminal est inférieur au niveau de priorité prédéfini, ou si un niveau de priorité prédéfini n'est pas configuré et que le niveau de priorité de la transmission de trafic du second terminal est inférieur au niveau de priorité de la transmission de trafic du premier terminal ; dans lequel, après la détermination de ressources, dans les ressources candidates, autres que les ressources requises par la transmission de trafic du second terminal, en tant que les ressources disponibles, le procédé comprend en outre l'étape consistant à : mettre à jour chaque fois la première valeur seuil conformément à une règle d'augmentation d'une valeur prédéfinie sur la base de la première valeur seuil, si les ressources disponibles ne satisfont pas une condition prédéfinie.

2. Procédé de sélection de ressources selon la revendication 1, dans lequel la détermination des ressources requises par la transmission de trafic du second terminal consiste à :
déterminer les ressources requises par la transmission de trafic du second terminal, conformément à une relation d'amplitude entre la puissance de réception de signal et la première valeur seuil ;
dans lequel, après la détermination de ressources, dans les ressources candidates, autres que les ressources requises par la transmission de trafic du second terminal, en tant que les ressources disponibles, le procédé comprend en outre l'étape consistant à :
mettre à jour chaque fois la première valeur seuil conformément à une règle d'augmentation d'une valeur prédéfinie sur la base de la première valeur seuil, en partant du principe que la première valeur seuil est inférieure à une seconde valeur seuil, si les ressources disponibles ne satisfont pas une condition prédéfinie.

3. Procédé de sélection de ressources selon la revendication 1, dans lequel la détermination des ressources requises par la transmission de trafic du second terminal consiste à :
déterminer les ressources requises par une transmission de trafic du second terminal, conformément à une relation d'amplitude entre la puissance de réception de signal et une première valeur seuil ;
dans lequel, après la détermination de ressources, dans les ressources candidates, autres que les ressources requises par la transmission de trafic du second terminal, en tant que les ressources disponibles, le procédé comprend en outre l'étape consistant à :
mettre à jour chaque fois la première valeur seuil conformément à une règle d'augmentation d'une valeur prédéfinie sur la base de la première valeur seuil, en partant du principe que le nombre de mises à jour de la première valeur seuil est inférieur à un nombre de fois prédéfini, si les ressources disponibles ne satisfont pas une condition prédéfinie.

4. Procédé de sélection de ressources selon la revendication 1, dans lequel la détermination des ressources requises par la transmission de trafic du second terminal consiste à :
déterminer les ressources requises par la transmission de trafic du second terminal, conformément à une relation d'amplitude entre la puissance de réception de signal et une première valeur seuil ;
dans lequel, après la détermination de ressources, dans les ressources candidates, autres que les ressources requises par la transmission de trafic du second terminal, en tant que les ressources disponibles, le procédé comprend en outre l'étape consistant à :
mettre à jour chaque fois la première valeur seuil conformément à une règle d'augmentation d'une valeur d'augmentation sur la base de la première valeur seuil, conformément à une correspondance entre le niveau de priorité de la transmission de trafic du second terminal et la valeur d'augmentation, si les ressources disponibles ne satisfont pas une condition prédéfinie.

5. Procédé de sélection de ressources selon la revendication 1, dans lequel, dans un cas dans lequel le niveau de priorité de la transmission de trafic du premier terminal est supérieur ou égal au niveau de priorité de transmission de trafic du second terminal, et après la détermination des ressources requises par la transmission de trafic du second terminal, le procédé comprend en outre l'étape consistant à :
déterminer, en tant que les ressources disponibles dans les ressources candidates, des ressources dans un état inoccupé et les ressources requises par la transmission de trafic du second terminal, conformément aux ressources requises par la transmission de trafic du second terminal ;
ou,
déterminer, en tant que les ressources disponibles, des ressources dans un état inoccupé dans les ressources candidates conformément aux ressources requises par la transmission de trafic du second terminal.

6. Terminal, le terminal étant un premier terminal, le terminal comprenant :
un émetteur-récepteur (1010), une mémoire (1020), un processeur (1000) et un programme mémorisé dans la mémoire (1020) et pouvant être exécuté par le processeur (1000), dans lequel le processeur (1000) est configuré pour mettre en œuvre les étapes suivantes, lors de l'exécution du programme, consistant à :
obtenir des informations de base transmises par un second terminal, dans lequel les informations de base comprennent un niveau de priorité, dans des informations de commande, de transmission de trafic du second terminal, et comprennent une puissance de réception de signal de la transmission de trafic du second terminal ;
déterminer des ressources disponibles, dans des ressources candidates, disponibles pour une transmission de trafic conformément au niveau de priorité de la transmission de trafic du second terminal et à la puissance de réception de signal de la transmission de trafic du second terminal ;
sélectionner une ou plusieurs ressources cibles requises par la transmission de trafic parmi les ressources disponibles, conformément à un niveau de priorité de transmission de trafic du premier terminal,
dans lequel l'étape de détermination des ressources disponibles, dans les ressources candidates, disponibles pour la transmission de trafic mise en œuvre par le processeur (1000) consiste plus particulièrement à :
déterminer des ressources requises par la transmission de trafic du second terminal, conformément au niveau de priorité de la transmission de trafic du second terminal et/ou à la puissance de réception de signal de la transmission de trafic du second terminal ;
déterminer des ressources, dans les ressources candidates, autres que les ressources requises par la transmission de trafic du second terminal, en tant que les ressources disponibles conformément aux ressources requises par la transmission de trafic du second terminal,
dans lequel la détermination de ressources requises par la transmission de trafic du second terminal mise en œuvre par le processeur (1000) consiste plus particulièrement à :
déterminer que, dans les ressources candidates, des ressources temps-fréquence indiquées par les informations de commande sont des ressources requises par la transmission de trafic du second terminal, si un niveau de priorité prédéfini est configuré et que le niveau de priorité de la transmission de trafic du second terminal est supérieur ou égal au niveau de priorité prédéfini, ou si un niveau de priorité prédéfini n'est pas configuré et que le niveau de priorité de la transmission de trafic du second terminal est supérieur ou égal au niveau de priorité de la transmission de trafic du premier terminal ; et
déterminer, conformément à une relation d'amplitude entre une valeur de la puissance de réception de signal et une première valeur seuil, des ressources requises par la transmission de trafic du second terminal, si un niveau de priorité prédéfini est configuré et que le niveau de priorité de la transmission de trafic du second terminal est inférieur au niveau de priorité prédéfini, ou si un niveau de priorité prédéfini n'est pas configuré et que le niveau de priorité de la transmission de trafic du second terminal est inférieur au niveau de priorité de la transmission de trafic du premier terminal ; dans lequel, après la détermination de ressources, dans les ressources candidates, autres que les ressources requises par la transmission de trafic du second terminal, en tant que les ressources disponibles, mise en œuvre par le processeur (1000), le processeur (1000) met en outre en œuvre, lors de l'exécution du programme : une mise à jour chaque fois de la première valeur seuil conformément à une règle d'augmentation d'une valeur prédéfinie sur la base de la première valeur seuil, si les ressources disponibles ne satisfont pas une condition prédéfinie.

7. Terminal selon la revendication 6, dans lequel, la détermination des ressources requises par la transmission de trafic du second terminal mise en œuvre par le processeur consiste plus particulièrement à :
déterminer les ressources requises par la transmission de trafic du second terminal, conformément à une relation d'amplitude entre la puissance de réception de signal et la première valeur seuil ;
dans lequel le processeur est en outre configuré pour mettre en œuvre, après la détermination de ressources, dans les ressources candidates, autres que les ressources requises par la transmission de trafic du second terminal, en tant que les ressources disponibles, mise en œuvre par le processeur, l'étape suivante, lors de l'exécution du programme, consistant à :
mettre à jour chaque fois la première valeur seuil conformément à une règle d'augmentation d'une valeur prédéfinie sur la base de la première valeur seuil, en partant du principe que la première valeur seuil est inférieure à une seconde valeur seuil, si les ressources disponibles ne satisfont pas une condition prédéfinie.

8. Terminal selon la revendication 6, dans lequel la détermination des ressources requises par la transmission de trafic du second terminal, mise en œuvre par le processeur (1000), consiste plus particulièrement à :
déterminer les ressources requises par une transmission de trafic du second terminal, conformément à une relation d'amplitude entre la puissance de réception de signal et une première valeur seuil ;
dans lequel le processeur est en outre configuré pour mettre en œuvre, après la détermination de ressources, dans les ressources candidates, autres que les ressources requises par la transmission de trafic du second terminal, en tant que les ressources disponibles, mise en œuvre par le processeur, l'étape suivante, lors de l'exécution du programme, consistant à :
mettre à jour chaque fois la première valeur seuil conformément à une règle d'augmentation d'une valeur prédéfinie sur la base de la première valeur seuil, en partant du principe que le nombre de mises à jour de la première valeur seuil est inférieur à un nombre de fois prédéfini, si les ressources disponibles ne satisfont pas une condition prédéfinie.

9. Terminal selon la revendication 6, dans lequel la détermination des ressources requises par la transmission de trafic du second terminal, mise en œuvre par le processeur (1000), consiste plus particulièrement à :
déterminer les ressources requises par la transmission de trafic du second terminal, conformément à une relation d'amplitude entre la puissance de réception de signal et une première valeur seuil ;
dans lequel le processeur est en outre configuré pour mettre en œuvre, après la détermination de ressources, dans les ressources candidates, autres que les ressources requises par la transmission de trafic du second terminal, en tant que les ressources disponibles, mise en œuvre par le processeur, l'étape suivante, lors de l'exécution du programme, consistant à :
mettre à jour chaque fois la première valeur seuil conformément à une règle d'augmentation d'une valeur d'augmentation sur la base de la première valeur seuil, conformément à une correspondance entre le niveau de priorité de la transmission de trafic du second terminal et la valeur d'augmentation, si les ressources disponibles ne satisfont pas une condition prédéfinie.

10. Terminal selon la revendication 6, dans lequel, dans un cas dans lequel le niveau de priorité de la transmission de trafic du premier terminal est supérieur ou égal au niveau de priorité de transmission de trafic du second terminal, et après la détermination des ressources requises par la transmission de trafic du second terminal, le processeur (1000) est en outre configuré pour mettre en œuvre l'étape suivante, lors de l'exécution du programme, consistant à :
déterminer, en tant que les ressources disponibles dans les ressources candidates, des ressources dans un état inoccupé et les ressources requises par la transmission de trafic du second terminal, conformément aux ressources requises par la transmission de trafic du second terminal ;
ou,
déterminer, en tant que les ressources disponibles, des ressources dans un état inoccupé dans les ressources candidates conformément aux ressources requises par la transmission de trafic du second terminal.

11. Support d'informations lisible par ordinateur comportant, mémorisé en son sein, un programme d'ordinateur qui, lorsque le programme d'ordinateur est exécuté par un processeur, amène le processeur à mettre en œuvre les étapes suivantes consistant à :
obtenir des informations de base transmises par un second terminal, dans lequel les informations de base comprennent un niveau de priorité, dans des informations de commande, de transmission de trafic du second terminal, et comprennent une puissance de réception de signal de la transmission de trafic du second terminal ;
déterminer des ressources disponibles, dans des ressources candidates, disponibles pour une transmission de trafic conformément au niveau de priorité de la transmission de trafic du second terminal et à la puissance de réception de signal de la transmission de trafic du second terminal ;
sélectionner une ou plusieurs ressources cibles requises par la transmission de trafic parmi les ressources disponibles, conformément à un niveau de priorité de transmission de trafic du premier terminal,
dans lequel l'étape de détermination des ressources disponibles, dans les ressources candidates, disponibles pour la transmission de trafic consiste plus particulièrement à :
déterminer des ressources requises par la transmission de trafic du second terminal, conformément au niveau de priorité de la transmission de trafic du second terminal et/ou à la puissance de réception de signal de la transmission de trafic du second terminal ;
déterminer des ressources, dans les ressources candidates, autres que les ressources requises par la transmission de trafic du second terminal, en tant que les ressources disponibles conformément aux ressources requises par la transmission de trafic du second terminal,
dans lequel la détermination de ressources requises par la transmission de trafic du second terminal consiste plus particulièrement à :
déterminer que, dans les ressources candidates, des ressources temps-fréquence indiquées par les informations de commande sont des ressources requises par la transmission de trafic du second terminal, si un niveau de priorité prédéfini est configuré et que le niveau de priorité de la transmission de trafic du second terminal est supérieur ou égal au niveau de priorité prédéfini, ou si un niveau de priorité prédéfini n'est pas configuré et que le niveau de priorité de la transmission de trafic du second terminal est supérieur ou égal au niveau de priorité de la transmission de trafic du premier terminal ; et
déterminer, conformément à une relation d'amplitude entre une valeur de la puissance de réception de signal et une première valeur seuil, des ressources requises par la transmission de trafic du second terminal, si un niveau de priorité prédéfini est configuré et que le niveau de priorité de la transmission de trafic du second terminal est inférieur au niveau de priorité prédéfini, ou si un niveau de priorité prédéfini n'est pas configuré et que le niveau de priorité de la transmission de trafic du second terminal est inférieur au niveau de priorité de la transmission de trafic du premier terminal ; dans lequel, après la détermination de ressources, dans les ressources candidates, autres que les ressources requises par la transmission de trafic du second terminal, en tant que les ressources disponibles, le processeur met en outre en œuvre l'étape suivante, lorsque le programme est exécuté par le processeur, consistant à : mettre à jour chaque fois la première valeur seuil conformément à une règle d'augmentation d'une valeur prédéfinie sur la base de la première valeur seuil, si les ressources disponibles ne satisfont pas une condition prédéfinie.

12. Support d'informations lisible par ordinateur selon la revendication 11, dans lequel la détermination des ressources requises par la transmission de trafic du second terminal consiste plus particulièrement à :
déterminer les ressources requises par la transmission de trafic du second terminal, conformément à une relation d'amplitude entre la puissance de réception de signal et la première valeur seuil ;
dans lequel, après la détermination de ressources, dans les ressources candidates, autres que les ressources requises par la transmission de trafic du second terminal, en tant que les ressources disponibles, le programme d'ordinateur, lorsque le programme d'ordinateur est exécuté par le processeur, amène en outre le processeur à mettre en œuvre l'étape suivante consistant à :
mettre à jour chaque fois la première valeur seuil conformément à une règle d'augmentation d'une valeur prédéfinie sur la base de la première valeur seuil, en partant du principe que la première valeur seuil est inférieure à une seconde valeur seuil, si les ressources disponibles ne satisfont pas une condition prédéfinie.

13. Support d'informations lisible par ordinateur selon la revendication 11, dans lequel la détermination des ressources requises par la transmission de trafic du second terminal consiste plus particulièrement à :
déterminer les ressources requises par une transmission de trafic du second terminal, conformément à une relation d'amplitude entre la puissance de réception de signal et une première valeur seuil ;
dans lequel, après la détermination de ressources, dans les ressources candidates, autres que les ressources requises par la transmission de trafic du second terminal, en tant que les ressources disponibles, mise en œuvre par le processeur, le programme d'ordinateur, lorsqu'il est exécuté par le processeur, amène en outre le processeur à mettre en œuvre l'étape suivante consistant à :
mettre à jour chaque fois la première valeur seuil conformément à une règle d'augmentation d'une valeur prédéfinie sur la base de la première valeur seuil, en partant du principe que le nombre de mises à jour de la première valeur seuil est inférieur à un nombre de fois prédéfini, si les ressources disponibles ne satisfont pas une condition prédéfinie.

14. Support d'informations lisible par ordinateur selon la revendication 11, dans lequel la détermination des ressources requises par la transmission de trafic du second terminal consiste plus particulièrement à :
déterminer les ressources requises par la transmission de trafic du second terminal, conformément à une relation d'amplitude entre la puissance de réception de signal et une première valeur seuil ;
dans lequel, après la détermination de ressources, dans les ressources candidates, autres que les ressources requises par la transmission de trafic du second terminal, en tant que les ressources disponibles, le programme d'ordinateur, lorsqu'il est exécuté par le processeur, amène en outre le processeur à mettre en œuvre l'étape suivante consistant à :
mettre à jour chaque fois la première valeur seuil conformément à une règle d'augmentation d'une valeur d'augmentation sur la base de la première valeur seuil, conformément à une correspondance entre le niveau de priorité de la transmission de trafic du second terminal et la valeur d'augmentation, si les ressources disponibles ne satisfont pas une condition prédéfinie.

15. Support d'informations lisible par ordinateur selon la revendication 11, dans lequel, dans un cas dans lequel le niveau de priorité de la transmission de trafic du premier terminal est supérieur ou égal au niveau de priorité de transmission de trafic du second terminal, et après la détermination des ressources requises par la transmission de trafic du second terminal, le programme d'ordinateur, lorsqu'il est exécuté par le processeur, amène en outre le processeur à mettre en œuvre l'étape suivante consistant à :
déterminer, en tant que les ressources disponibles dans les ressources candidates, des ressources dans un état inoccupé et les ressources requises par la transmission de trafic du second terminal, conformément aux ressources requises par la transmission de trafic du second terminal ;
ou,
déterminer, en tant que les ressources disponibles, des ressources dans un état inoccupé dans les ressources candidates conformément aux ressources requises par la transmission de trafic du second terminal.
